# EUROPEAN PATENT APPLICATION

(11) **EP 4 524 652 A1**
(43) Date of publication of application: **19.03.2025**
(21) Application number: 24198354.3
(22) Date of filing: 04.09.2024
(51) Int. Cl.: G03B 21/20

(54) **PROJECTOR**

(30) Priority: 04.09.2023 JP 2023143192
(71) Applicant: Seiko Epson Corporation, Tokyo 160-8801 (JP)
(72) Inventor: SATO, Kiyomi, Suwa-shi, 392-8502 (JP); KATO, Masashi, Suwa-shi, 392-8502 (JP); AMANO, Yutaka, Suwa-shi, 392-8502 (JP)
(74) Representative: Lewis Silkin LLP

(57) **Abstract**

In a projector according to an aspect of the present disclosure, first light in a first wavelength band output from a first light source sequentially passes through a first light guiding part and a first parallelizing part and enters a light combiner. Second light in a second wavelength band output from a second light source sequentially passes through a second light guiding part and a second parallelizing part and enters the light combiner. Third light in a third wavelength band output from a third light source sequentially passes through a third light guiding part and a third parallelizing part and enters the light combiner. A first focal length of the first parallelizing part is longer than a first length from a first light incident end to a first light exiting end of the first light guiding part, a second focal length of the second parallelizing part is longer than a second length from a second light incident end to a second light exiting end of the second light guiding part, and a third focal length of the third parallelizing part is longer than a third length from a third light incident end to a third light exiting end of the third light guiding part.

## Description

The present application is based on, and claims priority from JP Application Serial Number 2023-143192, filed September 4, 2023, the disclosure of which is hereby incorporated by reference herein in its entirety.

### BACKGROUND

### 1. Technical Field

The present disclosure relates to a projector.

### 2. Related Art

There is a known projector including three liquid crystal panels as a light modulation apparatus that generates image light based on each of three primary colors, that is, a three-plate projector. For example, JP-A-2020-079820 discloses a projector including a light source apparatus including a light source section and a light separator/combiner, an illumination system, a color separation/light combining system, and a projection system. The light source section outputs light that excites a phosphor. The light separator/combiner causes part of the light output from the light source section to enter the phosphor, and causes the other part of the light output from the light source section to be incident on a diffuser so that the diffuser reflects the light. The illumination system radiates the light output from the light source apparatus. The color separation/light combining system performs color separation and color combination on the light output from the illumination system. The projection system enlarges the image light having undergone the color combination and projects the enlarged image light onto an image display surface such as a screen.

JP-A-2020-079820 is an example of the related art.

In the three-plate projector disclosed in JP-A-2020-079820, after white light is generated by the light source apparatus, the white light is separated into multiple types of color light by the color separation/light combining system disposed downstream from the light source apparatus. The projector disclosed in JP-A-2020-079820 therefore needs to further include the color separation/light combining system in addition to the light source apparatus. As a result, the number of parts increases, which may lead to an increase in size of the projector. That is, it is desired to provide measures to reduce the number of parts of a three-plate projector to suppress an increase in size thereof.

### SUMMARY

A projector according to an aspect of the present disclosure includes a first light source configured to output first light in a first wavelength band; a second light source configured to output second light in a second wavelength band different from the first wavelength band; a third light source configured to output third light in a third wavelength band different from the first and second wavelength bands; a first light guiding part having a first light incident end on which the first light output from the first light source is incident and a first light exiting end via which the first light exits, the first light guiding part configured to homogenize in-plane illuminance of the first light; a second light guiding part having a second light incident end on which the second light output from the second light source is incident and a second light exiting end via which the second light exits, the second light guiding part configured to homogenize in-plane illuminance of the second light; a third light guiding part having a third light incident end on which the third light output from the third light source is incident and a third light exiting end via which the third light exits, the third light guiding part configured to homogenize in-plane illuminance of the third light; a first parallelizing part configured to parallelize the first light output from the first light guiding part; a second parallelizing part configured to parallelize the second light output from the second light guiding part; a third parallelizing part configured to parallelize the third light output from the third light guiding part; a first light modulator configured to modulate the first light output from the first parallelizing part based on image information; a second light modulator configured to modulate the second light output from the second parallelizing part based on image information; a third light modulator configured to modulate the third light output from the third parallelizing part based on image information; a light combiner configured to combine the first light output from the first light modulator, the second light output from the second light modulator, and the third light output from the third light modulator with one another and outputs the combined light; and a projection system configured to project the combined light output from the light combiner. A first focal length of the first parallelizing part is longer than a first length from the first light incident end to the first light exiting end, a second focal length of the second parallelizing part is longer than a second length from the second light incident end to the second light exiting end, and a third focal length of the third parallelizing part is longer than a third length from the third light incident end to the third light exiting end.

### BRIEF DESCRIPTION OF THE DRAWINGS

FIG. 1 is a schematic diagram showing the configuration of a projector according to an embodiment.
FIG. 2 is a schematic view of a green light emitter of the projector in FIG. 1.
FIG. 3 is a schematic view of the green light emitter and a light-incident-side polarizer of the projector in FIG. 1.
FIG. 4 is a schematic view of the green light emitter, the light-incident-side polarizer, and a light modulator of the projector in FIG. 1.
FIG. 5 is a schematic view of a variation of the green light emitter of the projector in FIG. 1.
FIG. 6 is a schematic view of another variation of the green light emitter of the projector in FIG. 1.
FIG. 7 is a schematic view of another variation of the green light emitter of the projector in FIG. 1.
FIG. 8 is a schematic view of another variation of the green light emitter of the projector in FIG. 1.
FIG. 9 is a schematic view of key parts of the green light emitter of the projector in FIG. 1.

### DESCRIPTION OF EMBODIMENTS

An embodiment of the present disclosure will be described below with reference to the drawings. In the drawings, elements are drawn at different dimensional scales in some cases for clarity of each of the elements.

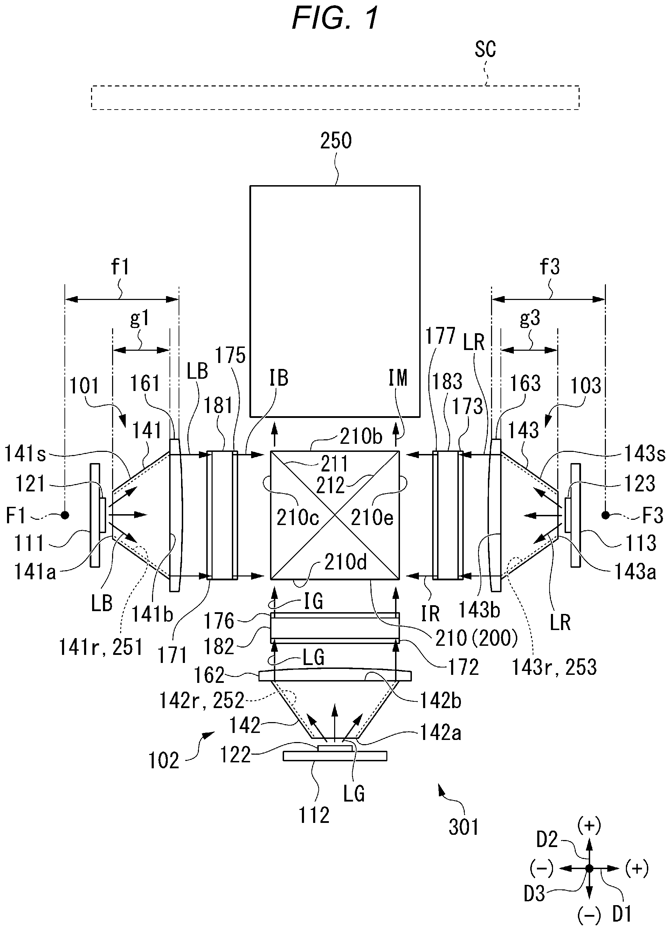

The embodiment of the present disclosure will first be described with reference to FIGS. 1 to 5. FIG. 1 is a schematic view showing the configuration of a projector 301 according to the embodiment of the present disclosure. The projector 301 is an image display apparatus including three liquid crystal panels as a light modulation apparatus, and is what is called a three-plate projector. The projector 301 includes a blue light emitter 101, a green light emitter 102, a red light emitter 103, light-incident-side polarizers 171, 172, and 173, light modulators 181, 182, and 183, light-exiting-side polarizers 175, 176, and 177, a light combiner 200, and a projection system 250, as shown in FIG. 1.

The blue light emitter 101 emits blue light LB. In the following description, an axis parallel to the optical axis of the blue light LB emitted from the blue light emitter 101 is referred to as a D1 direction. One side in the D1 direction is referred to as a -D1 side, and the side opposite from the -D1 side in the D1 direction is referred to as a +D1 side. A direction perpendicular to the D1 direction in a plane containing the optical axis of the blue light LB is referred to as a D2 direction. One side in the D2 direction is referred to as a -D2 side, and the side opposite from the -D2 side in the D2 direction is referred to as a +D2 side. The direction perpendicular to the D1 and D2 directions is referred to as a D3 direction. The blue light LB emitted from the blue light emitter 101 travels toward the +D1 side along the D1 direction.

The blue light emitter 101 includes a light source 121, a light guiding part 141, and a parallelizing part 161. The light source 121 is supported by a substrate 111. The light source 121 is provided at the +D1-side plate surface of the substrate 111 out of the plate surfaces of the substrate 111 that are parallel to a plane containing the D2 and D3 directions. The light emission surface of the light source 121 is disposed substantially in parallel to the plane containing the D2 and D3 directions, and is a surface opposite in the D1 direction to the surface of the light source 121 that is in contact with the +D1-side plate surface of the substrate 111. The light source 121 corresponds to a first light source, and outputs blue light LB in a blue wavelength band in a visible wavelength band. The blue wavelength band corresponds to a first wavelength band. The blue light LB corresponds to first light. The blue light LB diverges from the light emission surface of the light source 121 in accordance with a predetermined radiation angle around the axis passing through the center of the light emission surface of the light source 121 and parallel to the D1 direction, and exits toward the +D1 side. The blue wavelength band is, for example, a wavelength band ranging from 420 nm to 500 nm.

The light source 121 is configured, for example, with a light emitting diode (LED) that emits the blue light LB. Note that the light source 121 may be configured with one LED or multiple LEDs as a whole. When the light source 121 is configured with multiple LEDs, the multiple LEDs are arranged in the region occupied by the light source 121 in a plane containing the D2 and D3 directions.

The substrate 111 is made, for example, of metal, and also acts as a heat dissipation member that receives heat from the light source 121 outputting the blue light LB and dissipates the heat to an external space.

The light guiding part 141 is provided in the optical path of the blue light LB output from the light source 121, and is disposed at the +D1 side of the light source 121 at a position where the light guiding part 141 overlaps with the light source 121 in the D2 and D3 directions. The light guiding part 141 corresponds to a first light guiding part, and has a light incident end 141a at the -D1 side in the D1 direction, a light exiting end 141b at the +D1 side in the D1 direction, and a side surface 141s and a reflection surface 141r extending between the light incident end 141a and the light exiting end 141b in the D1 direction. The light incident end 141a corresponds to a first light incident end and spreads in parallel to a plane containing the D2 and D3 directions. The shape of the light incident end 141a viewed in the D1 direction is the same as the shape of the light emission surface of the light source 121 viewed in the same direction, and is, for example, a rectangular shape. The size of the light incident end 141a in the plane containing the D2 and D3 directions may be equal to the size of the light emission surface of the light source 121 in the plane containing the D2 and D3 directions, and is preferably appropriately greater than the size of the light emission surface of the light source 121 in the plane containing the D2 and D3 directions. The light exiting end 141b corresponds to a first light exiting end, spreads in parallel to the plane containing the D2 and D3 directions, and is larger than the light incident end 141a. The shape of the light exiting end 141b viewed in the D1 direction is the same as the shape of the light modulation surface of the light modulator 181 viewed in the same direction, and is, for example, a rectangular shape. The size of the light exiting end 141b in the plane containing the D2 and D3 directions is equal to the size of the light modulation surface of the light modulator 181 in the plane containing the D2 and D3 directions. The side surface 141s and the reflection surface 141r couple the periphery of the light incident end 141a to the periphery of the light exiting end 141b in the D1 direction.

The blue light LB output from the light source 121 enters the light guiding part 141 via the light incident end 141a. In the light guiding part 141, the region surrounded by the light incident end 141a, the light exiting end 141b, and the reflection surface 141r is a region through which the blue light LB propagates. The size, in the plane containing the D2 and D3 directions, of the region surrounded by the light incident end 141a, the light exiting end 141b, and the reflection surface 141r increases as the region extends from the -D1 side toward the +D1 side in the D1 direction. Furthermore, the shape, in the plane containing the D2 and D3 directions, of the region surrounded by the light incident end 141a, the light exiting end 141b, and the reflection surface 141r changes from the shape of the light emission surface of the light source 121 to the shape of the light modulation surface of the light modulator 181 as the region extends from the -D1 side toward the +D1 side when viewed in the D1 direction.

The side surface 141s of the light guiding part 141 and the reflection surface 141r provided at the side surface 141s as will be described later incline by a predetermined angle with respect to an imaginary line and the optical axis perpendicular to the light incident end 141a, and are separate away from the imaginary line in the plane containing the D2 and D3 directions as the light guiding part 141 extends from the -D1 side toward the +D1 side. The blue light LB having entered the light guiding part 141 propagates from the -D1 side toward the +D1 side in the region surrounded by the light incident end 141a, the light exiting end 141b, and the reflection surface 141r.

When the light modulation surface of the light modulator 181 has a rectangular shape when viewed along the D1 direction, the shape of the light emission surface of the light source 121 viewed along the D1 direction is also matched with the rectangular shape. In this case, it is preferable that a predetermined angle α, that is, the taper angle of the side surface 141s and the reflection surface 141r containing the short sides of the rectangular shape with respect to the imaginary line and the optical axis described above falls within a range from 7° to 22°. It is preferable that a predetermined angle β, that is, the taper angle of the side surface 141s and the reflection surface 141r containing the long sides of the rectangular shape with respect to the imaginary line and the optical axis described above falls within a range from 14° to 36°. The preferable ranges of the angles α and β have been ascertained by a numerical simulation based on the configuration of the blue light emitter 101 and ray tracing.

Part of the blue light LB having entered the light guiding part 141 inclines by angles smaller than the predetermined angle with respect to the imaginary line and the optical axis described above, and propagates directly from the light incident end 141a to the light exiting end 141b without being incident on the reflection surface 141r even once. The remaining part of the blue light LB having entered the light guiding part 141 inclines by angles greater than or equal to the predetermined angle with respect to the imaginary line and the optical axis described above, is incident on the reflection surface 141r via the light incident end 141a once or a greater number of times, is reflected off the reflection surface 141r, and then reaches the light exiting end 141b. The optical path of the blue light LB in the region surrounded by the light incident end 141a, the light exiting end 141b, and the reflection surface 141r varies in accordance with the angle of incidence of the blue light LB with respect to the light incident end 141a, and there are multiple paths along which the blue light LB is reflected off the reflection surface 141r by different numbers of times. The illuminance distribution of the blue light LB having propagated through the region surrounded by the light incident end 141a, the light exiting end 141b, and the reflection surface 141r is therefore homogenized in the planes containing the D2 and D3 directions. That is, the light guiding part 141 homogenizes the illuminance distribution of the incident blue light LB in the planes containing the D2 and D3 directions. The blue light LB having the homogenized illuminance distribution exits via the light exiting end 141b toward the +D1 side.

The light guiding part 141 is, for example, a reflector made of a transparent material such as optical glass. The reflector is formed as a hollow member having a frame body. When viewed along the D1 direction, the -D1-side end of the frame body of the reflector has a shape and size that are the same as those of the light incident end 141a and the light emission surface of the light source 121, and is formed, for example, in the shape of a rectangular frame. The +D1-side end of the frame body of the reflector has a shape and size that are the same as those of the light exiting end 141b and the light modulation surface of the light modulator 181, and is formed, for example, in the shape of a rectangular frame having a size different from that of the -D1-side end.

The reflector is configured, for example, with a plate-shaped member made of a transparent material. As described above, when the light incident end 141a and the light exiting end 141b have rectangular shapes when viewed in the D1 direction, the reflector is configured with four plate-shaped members each having a trapezoidal shape. The length of the sides at the -D1 side that are parallel to the D2 or D3 direction and correspond to the upper bases of the four plate-shaped members is set in accordance with the size of the light incident end 141a and the light emission surface of the light source 121 in the D2 or D3 direction. The length of the sides at the +D1 side that are parallel to the D2 or D3 direction and correspond to the lower bases of the four plate-shaped members is set in accordance with the size of the light exiting end 141b and the light modulation surface of the light modulator 181 in the D2 or D3 direction. Out of the four plate-shaped members, a side corresponding to one leg of one of two adjacent plate-shaped members is coupled to a side corresponding to the other leg of the other plate-shaped member.

As described above, when the reflector is configured with the plate-shaped members made of a transparent material, the side surface 141s, that is, plate surfaces of the plate-shaped members that are surfaces facing the external space of the reflector act as the reflection surface 141r. To increase the reflectance in the vicinity of the side surface 141s for the blue light LB having entered the light guiding part 141 via the light incident end 141a, the reflector of the light guiding part 141 is provided with a reflection film 251 configured with a dielectric multilayer film or the like at plate surfaces of the plate-shaped members constituting the reflector that are surfaces facing the inner space of the reflector. Part of the blue light LB having entered the inner space of the reflector of the light guiding part 141 via the light incident end 141a is reflected off the reflection film 251 and travels toward the +D1 side.

The intensity of the blue light LB reflected off the reflection film 251 and output from the reflection film 251 depends in some cases on the angle of incidence of the blue light LB incident on the reflection film 251. When the reflection film 251 is configured with a dielectric multilayer film, the dependence of the intensity of the blue light LB output from the reflection film 251 on the angle of incidence changes in accordance, for example, with the refractive index of multiple films contained in the dielectric multilayer film, the thickness of each of the films, the number of films, and other parameters. For example, when the angle α falls within the range from 7° to 22° and the angle β falls within the range from 14° to 36° as described above, the reflection film 251 is designed and the parameters of the dielectric multilayer film are appropriately determined in such a way that the angle of incidence of the blue light LB output from the reflection surface 141r at which the intensity of the blue light LB is maximized falls within a range from 60° to 90°. The relationship between the angle of incidence of the blue light LB incident on the reflection surface 141r and the reflection film 251 and the intensity of the blue light LB output from the reflection surface 141r and the reflection film 251 is derived by a numerical simulation based on the configuration of the blue light emitter 101 and ray tracing.

Note that when the reflector is configured with plate-shaped members made of a transparent material, and plate surfaces of the plate-shaped members that are surfaces facing the external space of the reflector act as the reflection surface 141r, part of the blue light LB having entered the inner space of the reflector of the light guiding part 141 via the light incident end 141a enters the plate-shaped members via the plate surfaces of the plate-shaped members that are the surfaces facing the inner space of the reflector, is refracted by the plate-shaped members, is reflected off plate surfaces of the plate-shaped members that are surfaces facing the external space of the reflector, propagates through the plate-shaped members again, is refracted by the plate surfaces that face the inner space of the reflector, and is output into the inner space of the reflector, and travels toward the +D1 side.

The parallelizing part 161 is provided in the optical path of the blue light LB output from the light guiding part 141, and is disposed at the +D1 side of the light guiding part 141 at a position where the parallelizing part 161 overlaps with the light guiding part 141 in the D2 and D3 directions. The parallelizing part 161 corresponds to a first parallelizing part, and parallelizes the blue light LB output from the light guiding part 141 along the D1 direction.

The parallelizing part 161 is, for example, a plano-convex lens, and has a light incident surface configured with a planar surface perpendicular to the D1 direction, and a light exiting surface configured with a convex curved surface protruding toward the side toward which the blue light LB exits. The focal point of the plano-convex lens constituting the parallelizing part 161 is disposed at least at the -D1 side of the parallelizing part 161, and at the side opposite from the +D1 side, where the blue light LB is output from the parallelizing part 161, and further at the -D1 side of the light guiding part 141. The light incident surface of the plano-convex lens constituting the parallelizing part 161 is in contact with the light exiting end 141b of the light guiding part 141. Since the parallelizing part 161 is in contact with the light exiting end 141b, the blue light LB output via the light exiting end 141b of the light guiding part 141 is taken into the parallelizing part 161 as much as possible, so that loss of the blue light LB can be suppressed. Note, however, that the parallelizing part 161 may be an optical lens capable of parallelizing the incident blue light LB in place of a plano-convex lens, and may be disposed at an appropriate distance from the light guiding part 141 in the D1 direction.

A focal length f1 of the parallelizing part 161 corresponds to a first focal length, and is longer than a length g1 from the light incident end 141a to the light exiting end 141b of the light guiding part 141 in the D1 direction. The length g1 corresponds to a first length. Specifically, the focal length f1 of the parallelizing part 161 is preferably longer than or equal to 1.1 times the length g1 of the light guiding part 141. The focal length f1 is more preferably longer than or equal to 1.1 times the length g1 but shorter than or equal to 2.0 times the length g1. When the focal length f1 is set so as to fall within the range described above, the blue light LB output from the light source 121 is efficiently parallelized, so that the blue light LB is used at improved efficiency. A preferable range of the focal length f1 is ascertained by a numerical simulation based on the configuration of the blue light emitter 101 and ray tracing.

When the focal length f1 of the parallelizing part 161 is shorter than 1.1 times the length g1 of the light guiding part 141, the range illuminated with the blue light LB output from the parallelizing part 161 is excessively reduced, so that a part of the original image may not be displayed when the image light as a result of the conversion performed by the downstream light modulator 181 is enlarged, projected, and displayed on a screen SC. On the other hand, when the focal length f1 is longer than 2.0 times the length g1, part of the blue light LB output from the parallelizing part 161 does not enter the light modulator 181 disposed downstream from the parallelizing part 161. As a result, the efficiency at which the blue light LB is used may decrease.

The light-incident-side polarizer 171 is provided in the optical path of the blue light LB output from the parallelizing part 161, and is disposed at the +D1 side of the parallelizing part 161 at a position where the light-incident-side polarizer 171 overlaps with the parallelizing part 161 in the D2 and D3 directions. The light-incident-side polarizer 171 is in contact, for example, with the light modulator 181 at the -D1 side, and may instead be disposed at an appropriate distance from the light modulator 181 in the D1 direction. The light-incident-side polarizer 171 corresponds to a first polarizer, and outputs predetermined polarized light out of the blue light LB output from the parallelizing part 161 toward the +D1 side along the D1 direction. The predetermined polarized light corresponds to a first polarized component, and is, for example, S-polarized light. The light-incident-side polarizer 171 is, for example, a reflective polarizing plate having plate surfaces parallel to the plane containing the D2 and D3 directions. The light-incident-side polarizer 171 transmits part of the incident blue light LB that is blue light LB containing the predetermined polarized light toward the +D1 side, and reflects the other part of the blue light LB toward the -D1 side.

The light modulator 181 is provided in the optical path of the blue light LB output from the light-incident-side polarizer 171, and is disposed at the +D1 side of the light-incident-side polarizer 171 at a position where the light modulator 181 overlaps with the light-incident-side polarizer 171 in the D2 and D3 directions. The light modulator 181 corresponds to a first light modulator, and modulates the blue light LB output from the light-incident-side polarizer 171 based on image information transmitted from an image formation apparatus that is not shown but is externally coupled to the light modulator 181, such as a computer.

The light modulator 181 is, for example, a transmissive liquid crystal panel. The liquid crystal panel constituting the light modulator 181 has multiple pixels that are not shown. The pixels each include a switching element. The switching element is, for example, a polysilicon thin film transistor (TFT). An electric signal according to the brightness of the blue light at the relative position of each of the pixels at the light modulation surface of the light modulator 181 in an image projected by the projector 301 is supplied to the switching element in the pixel. The pixels each modulate the vibration direction of the blue light LB incident from the light-incident-side polarizer 171 with the aid of the operation of the switching element according to the electric signal described above to generate blue image light IB. The image light IB corresponds to the first light. The light modulator 181 outputs the image light IB generated by the liquid crystal panel toward the +D1 side along the D1 direction.

The light-exiting-side polarizer 175 is provided in the optical path of the image light IB output from the light modulator 181, and is disposed at the +D1 side of the light modulator 181 at a position where the light-exiting-side polarizer 175 overlaps with the light modulator 181 in the D2 and D3 directions. The light-exiting-side polarizer 175 is in contact, for example, with the light modulator 181 at the +D1 side, and may instead be disposed at an appropriate distance from the light modulator 181 in the D1 direction. The light-exiting-side polarizer 175 corresponds to a fourth polarizer, and outputs predetermined polarized light out of the image light IB output from the light modulator 181 toward the +D1 side along the D1 direction. The predetermined polarized light corresponds to a fourth polarized component, and is, for example, P-polarized light. The light-exiting-side polarizer 175 is, for example, a reflective or absorptive polarizing plate having plate surfaces parallel to the plane containing the D2 and D3 directions. When it is desired to suppress return light and stray light directed to the light modulator 181, it is desirable to employ an absorptive polarizing plate as the light-exiting-side polarizer 175. The light-exiting-side polarizer 175 transmits part of the incident image light IB that is image light IB containing the predetermined polarized light toward the +D1 side, and reflects the other part of the image light IB toward the -D1 side.

The green light emitter 102 is disposed at the +D1 side and the -D2 side of the blue light emitter 101, and is disposed in a region where the green light emitter 102 overlaps with the blue light emitter 101 in the D3 direction. The green light emitter 102 emits green light LG. The green light LG emitted from the green light emitter 102 travels toward the +D2 side along the D2 direction.

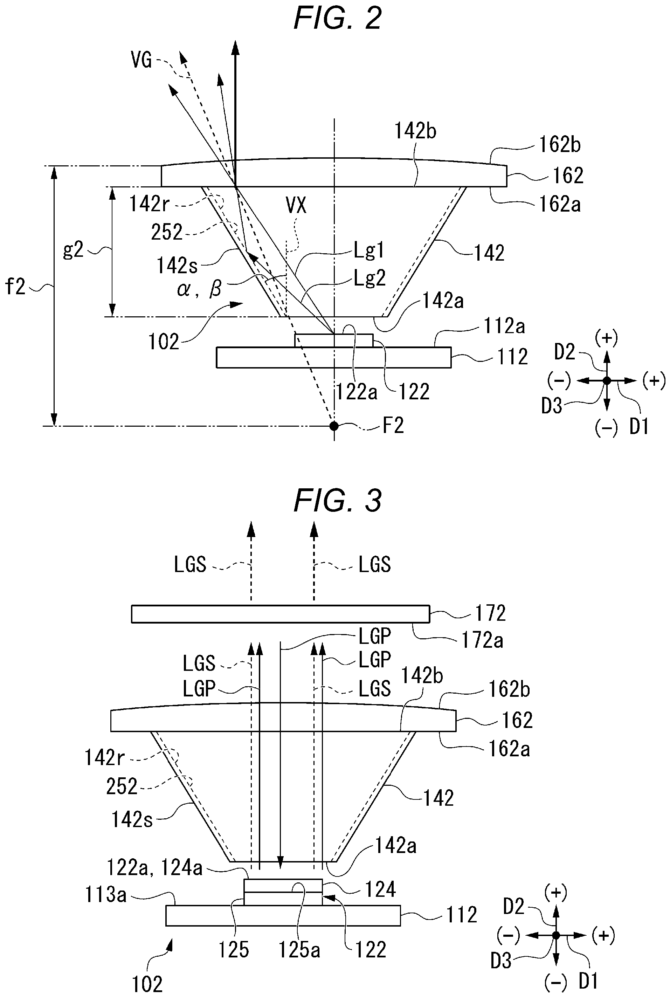

The green light emitter 102 includes a light source 122, a light guiding part 142, and a parallelizing part 162. FIG. 2 is a schematic view of the green light emitter 102 viewed along the D3 direction. FIG. 3 is a schematic view of the green light emitter 102 and the light-incident-side polarizer 172 viewed along the D3 direction. The light source 122 is supported by a substrate 112, as shown in FIGS. 1 to 3. The light source 122 is provided at the +D2-side plate surface of the substrate 112 out of the plate surfaces of the substrate 112 that are parallel to a plane containing the D1 and D3 directions. A light emission surface 122a of the light source 122 is disposed substantially in parallel to the plane containing the D1 and D3 directions, and is a surface opposite in the D2 direction to the surface of the light source 122 that is in contact with the +D2-side plate surface of the substrate 112. The light source 122 corresponds to a second light source, and outputs the green light LG in a green wavelength band in the visible wavelength band. The green wavelength band is, for example, a wavelength band ranging from 500 nm to 600 nm.

The light source 122 is configured, for example, with an LED that emits the green light LG. In the green light emitter 102, to optimize the green wavelength band and the intensity of the green light LG with respect to the blue wavelength band and the intensity of the blue light LB emitted by the blue light emitter 101 and a red wavelength band and the intensity of red light LR emitted by the red light emitter 103, the light source 122 is configured with an LED having a phosphor built therein, and includes an LED body 125 made of a semiconductor and a phosphor 124. The LED body 125 is provided at the +D2-side plate surface of the substrate 112. The LED body 125 may, for example, be an LED that emits the blue light LB, as in the light source 121. The phosphor 124 is layered on a light exiting surface 125a of the LED body 125, which is the surface facing at the +D2 side. The phosphor 124 is excited with the light emitted from the LED body 125 as excitation light, and emits the green light LG as fluorescence via a light exiting surface 124a. The type and material of the LED body 125 and the type and material of the phosphor 124 are appropriately so selected that the phosphor 124 excited with the light emitted from the LED body 125 emits the green light LG in the green wavelength band.

Note that the light source 122 may be configured with one LED or multiple LEDs as a whole, as the light source 121. When the light source 122 is configured with multiple LEDs, the multiple LEDs are arranged in the region occupied by the light source 122 in the plane containing the D1 and D3 directions.

The substrate 112 is made, for example, of metal, and also acts as a heat dissipation member that receives heat from the light source 122 outputting the green light LG and dissipates the heat to an external space.

The light guiding part 142 is provided in the optical path of the green light LG output from the light source 122, and is disposed at the +D2 side of the light source 122 at a position where the light guiding part 142 overlaps with the light source 122 in the D1 and D3 directions. The light guiding part 142 corresponds to a second light guiding part, and has a light incident end 142a at the -D2 side in the D2 direction, a light exiting end 142b at the +D2 side in the D2 direction, and a side surface 142s and a reflection surface 142r extending between the light incident end 142a and the light exiting end 142b in the D2 direction. The light incident end 142a corresponds to a second light incident end and spreads in parallel to the plane containing the D1 and D3 directions. The shape of the light incident end 142a viewed in the D2 direction is the same as the shape of the light emission surface 122a of the light source 122 viewed in the same direction, and is, for example, a rectangular shape. The size of the light incident end 142a in the plane containing the D1 and D3 directions may be equal to the size of the light emission surface 122a of the light source 122 in the plane containing the D1 and D3 directions, and is preferably appropriately greater than the size of the light emission surface 122a in the plane containing the D1 and D3 directions. The light exiting end 142b corresponds to a second light exiting end, spreads in parallel to the plane containing the D1 and D3 directions, and is larger than the light incident end 142a. The shape of the light exiting end 142b viewed in the D2 direction is the same as the shape of the light modulation surface of the light modulator 182 viewed in the same direction, and is, for example, a rectangular shape. The size of the light exiting end 142b in the plane containing the D1 and D3 directions is equal to the size of the light modulation surface of the light modulator 182 in the plane containing the D1 and D3 directions. The side surface 142s and the reflection surface 142r couple the periphery of the light incident end 142a and the periphery of the light exiting end 142b in the D2 direction.

The green light LG output from the light source 122 enters the light guiding part 142 via the light incident end 142a. In the light guiding part 142, the region surrounded by the light incident end 142a, the light exiting end 142b, and the reflection surface 142r is a region through which the green light LG propagates. The size of the region surrounded by the light incident end 142a, the light exiting end 142b, and the reflection surface 142r in the plane containing the D1 and D3 directions increases as the region extends from the -D2 side toward the +D2 side in the D2 direction. In addition, the shape of the region surrounded by the light incident end 142a, the light exiting end 142b, and the reflection surface 142r in the plane containing the D1 and D3 directions changes from the shape of the light emission surface 122a of the light source 122 to the shape of the light modulation surface of the light modulator 182 as the region extends from the -D2 side toward the +D2 side when viewed in the D2 direction.

The side surface 142s of the light guiding part 142 and the reflection surface 142r provided at the side surface 142s as will be described later incline by a predetermined angle with respect to an imaginary line VX perpendicular to the light incident end 142a and the optical axis of the light guiding part 142, and are separate away from the imaginary line in the plane containing the D1 and D3 directions as the light guiding part 142 extends from the -D2 side toward the +D2 side. The green light LG having entered the light guiding part 142 propagates from the -D2 side toward the +D2 side in the region surrounded by the light incident end 142a, the light exiting end 142b, and the reflection surface 142r.

When the light modulation surface of the light modulator 182 has a rectangular shape when viewed along the D2 direction, the shape of the light emission surface 122a of the light source 122 viewed along the D2 direction is also matched with the rectangular shape. In this case, it is preferable that the predetermined angle α of the side surface 142s and the reflection surface 142r containing the short sides of the rectangular shape with respect to the imaginary line and the optical axis described above falls within the range from 7° to 22°. It is preferable that the predetermined angle β of the side surface 142s and the reflection surface 142r containing the long sides of the rectangular shape with respect to the imaginary line and the optical axis described above falls within the range from 14° to 36°.

A beam Lg1, which is part of the green light LG having entered the light guiding part 142, inclines by an angle smaller than the angle α or β with respect to the imaginary line VX and the optical axis of the light guiding part 142, and propagates directly from the light incident end 142a to the light exiting end 142b without being incident on the reflection surface 142r even once. A beam Lg2, which is part of the remainder of the green light LG having entered the light guiding part 142, inclines by an angle greater than or equal to the angle α or β with respect to the imaginary line VX and the optical axis of the light guiding part 142, is incident via the light incident end 142a on the reflection surface 142r once, is reflected off the reflection surface 142r, and then reaches the light exiting end 142b. The beams excluding the beam Lg2, which is part of the remainder of the green light LG having entered the light guiding part 142, are incident via the light incident end 142a on the reflection surface 142r twice or a greater number of times, is repeatedly reflected off the reflection surface 142r, and then reaches the light exiting end 142b. The path of the beams constituting the green light LG in the region surrounded by the light incident end 142a, the light exiting end 142b, and the reflection surface 142r varies in accordance with the angles of incidence of the beams with respect to the light incident end 142a, and there are multiple paths along which the beams are reflected off the reflection surface 142r by different numbers of times. The illuminance distribution of the green light LG having propagated through the region surrounded by the light incident end 142a, the light exiting end 142b, and the reflection surface 142r is therefore homogenized in the plane containing the D1 and D3 directions. That is, the light guiding part 142 homogenizes the illuminance distribution of the incident green light LG in the plane containing the D1 and D3 directions. The green light LG having the homogenized illuminance distribution exits via the light exiting end 142b toward the +D2 side.

The light guiding part 142 is a hollow reflector configured with plate-shaped members made of a transparent material such as optical glass, as the light guiding part 141. When viewed along the D2 direction, the -D2-side end of the frame body of the reflector has a shape and size that are the same as those of the light incident end 142a and the light emission surface 122a of the light source 122, and is formed, for example, in the shape of a rectangular frame. The +D2-side end of the frame body of the reflector has a shape and size that are the same as those of the light exiting end 142b and the light modulation surface of the light modulator 182, and is formed, for example, in the shape of a rectangular frame having a size different from that of the -D2-side end.

The reflector of the light guiding part 142 is configured by coupling sides corresponding to the legs of four plate-shaped members each having a trapezoidal shape to each other. The length of the sides at the -D2 side that are parallel to the D1 or D3 direction and correspond to the upper bases of the four plate-shaped members is set in accordance with the size of the light incident end 142a and the light emission surface 122a in the D1 or D3 direction. The length of the sides at the +D2 side that are parallel to the D1 or D3 direction and correspond to the lower bases of the four plate-shaped members is set in accordance with the size of the light exiting end 142b and the light modulation surface of the light modulator 182 in the D1 or D3 direction.

To increase the reflectance in the vicinity of the side surface 142s for the green light LG having entered the light guiding part 142 via the light incident end 142a, the reflector of the light guiding part 142 is also provided with a reflection film 252, such as a dielectric multilayer film, at plate surfaces of the plate-shaped members constituting the reflector that are surfaces opposite from the side surface 142s, that is, plate surfaces of the plate-shaped members that are surfaces facing the inner space of the reflector. The beams including the beam Lg2, which is part of the green light LG having entered the inner space of the reflector of the light guiding part 142 via the light incident end 142a, is reflected off the reflection film 252 and travels toward the +D1 side.

The intensity of the green light LG reflected off the reflection film 252 and output from the reflection film 252 depends in some cases on the angle of incidence of the green light LG incident on the reflection film 252. When the reflection film 252 is configured with a dielectric multilayer film, the dependence of the intensity of the green light LG output from the reflection film 252 on the angle of incidence changes in accordance, for example, with the refractive index of multiple films contained in the dielectric multilayer film, the thickness of each of the films, the number of films, and other parameters. For example, when the angle α falls within the range from 7° to 22° and the angle β falls within the range from 14° to 36° as described above, the reflection film 252 is designed and the parameters of the dielectric multilayer film are appropriately determined in such a way that the angle of incidence of the green light LG output from the reflection surface 142r and the reflection film 252 at which the intensity of the green light LG is maximized is greater than or equal to 60° but smaller than or equal to 90°. The relationship between the angle of incidence of the green light LG to be incident on the reflection film 252 and the intensity of the green light LG output from the reflection film 252 is also derived by a numerical simulation based on the configuration of the green light emitter 102 and ray tracing.

The parallelizing part 162 is provided in the optical path of the green light LG output from the light guiding part 142, and is disposed at the +D2 side of the light guiding part 142 at a position where the parallelizing part 162 overlaps with the light guiding part 142 in the D1 and D3 directions. The parallelizing part 162 corresponds to a second parallelizing part, and parallelizes the green light LG output from the light guiding part 142 along the D2 direction.

The parallelizing part 162 is, for example, a plano-convex lens, and has a light incident surface 162a configured with a planar surface perpendicular to the D2 direction, and a light exiting surface 162b configured with a convex curved surface protruding toward the side toward which the green light LG exits. A focal point F2 of the plano-convex lens constituting the parallelizing part 162 is at least at the -D2 side of the parallelizing part 162, and at the side opposite from the +D2 side, where the green light LG is output from the parallelizing part 162, and further at the -D2 side of the light guiding part 142. The light incident surface 162a of the parallelizing part 162 is in contact with the light exiting end 142b of the light guiding part 142. Since the parallelizing part 162 is in contact with the light exiting end 142b, the green light LG output via the light exiting end 142b of the light guiding part 142 is taken into the parallelizing part 162 as much as possible, so that loss of the green light LG can be suppressed. Note, however, that the parallelizing part 162 may be an optical lens capable of parallelizing the incident green light LG in place of a plano-convex lens, and may be disposed at an appropriate distance from the light guiding part 142 in the D2 direction.

The focal length f2 of the parallelizing part 162 corresponds to a second focal length, and is longer than a length g2 from the light incident end 142a to the light exiting end 142b of the light guiding part 142 in the D2 direction. The length g2 corresponds to a second length.

The beam Lg1, which is part of the green light LG having entered the light guiding part 142, propagates directly from the light incident end 142a to the light exiting end 142b without being incident on the reflection surface 142r even once, as shown in FIG. 2 in detail. The beam Lg2, which is part of the remainder of the green light LG having entered the light guiding part 142, is incident via the light incident end 142a on the reflection surface 142r once, is reflected off the reflection surface 142r, and then reaches the light exiting end 142b. A combined vector VG, which is the combination of the light rays Lg1 and Lg2 output via the light exiting end 142b toward the +D2 side provided that the effect of the parallelizing part 162 is ignored, is indicated with the broken line. The combined vector VG at the light exiting end 142b is extended from the base end facing the -D2 side toward the -D2 side in parallel to the combined vector VG, and the focal point F2 is located at the position where the extended combined vector VG intersects with the center line and the optical axis of the parallelizing part 162 and the light guiding part 142 which contains the D1 and D3 directions. As described above, there are many paths of the beams constituting the green light LG propagating through the interior of the light guiding part 142 in addition to the paths of the beams Lg1 and Lg2. When the combined vector that is the combination of multiple beams contained in the green light LG output via the light exiting end 142b toward the +D2 side is extended toward the -D2 side provided that the effect of the parallelizing part 162 is ignored, the positions where the beams intersect with the center line and the optical axis of the parallelizing part 162 and the light guiding part 142 do not coincide with each other at a single point in an exact sense, but are scattered in a region having a slight width in the D2 direction and containing the focal point F2 determined by the combined vector VG. As a result, the focal point F2 of the plano-convex lens constituting the parallelizing part 162 has a slight spread in the D2 direction, but forms a macroscopically single point.

Also in the blue light emitter 101, when the combined vector that is the combination of multiple beams contained in the blue light LB output via the light exiting end 141b toward the +D1 side is extended toward the -D1 side provided that the effect of the parallelizing part 161 is ignored, the positions where the beams intersect with the center line and the optical axis of the parallelizing part 161 and the light guiding part 141 do not coincide with each other at a single point in an exact sense, but are scattered in a region having a slight width in the D1 direction, as in the green light emitter 102. As a result, a focal point F1 of the plano-convex lens constituting the parallelizing part 161 has a slight spread in the D1 direction, but forms a macroscopically single point.

Since the focal length f2 of the parallelizing part 162 is set so as to extend toward the - D2 side of the light guiding part 142 and to be longer than the length g2 of the light guiding part 142 in consideration of the position of the focal point F2 based on the principle described above, the multiple beams contained in the green light LG are efficiently made parallel to the D2 direction as indicated by the thick lines. The relationship between the focal length f2 of the parallelizing part 162 and the length g2 of the light guiding part 142, and the effect caused by the focal length f2 and the length g2 have been described with reference to FIG. 2, and the content described above is similarly applied to the relationship between the focal length f1 of the parallelizing part 161 of the blue light emitter 101 and the length g1 of the light guiding part 141, and the effect caused by the focal length f1 and the length g1.

Specifically, the focal length f2 of the parallelizing part 162 is preferably longer than or equal to 1.1 times the length g2 of the light guiding part 142. The focal length f2 is more preferably longer than or equal to 1.1 times the length g2 but shorter than or equal to 2.0 times the length g2. When the focal length f2 is set so as to fall within the range described above, the green light LG output from the light source 122 is efficiently parallelized, so that the green light LG is used at improved efficiency. A preferable range of the focal length f2 is also ascertained by a numerical simulation based on the configuration of the green light emitter 102 and ray tracing.

When the focal length f2 of the parallelizing part 162 is shorter than 1.1 times the length g2 of the light guiding part 142, the range illuminated with the green light LG output from the parallelizing part 162 is excessively reduced, so that a part of the original image may not be displayed when the image light as a result of the conversion performed by the downstream light modulator 182 is enlarged, projected, and displayed on the screen SC. On the other hand, when the focal length f2 is longer than 2.0 times the length g2, part of the green light LG output from the parallelizing part 162 does not enter the light modulator 182 disposed downstream from the parallelizing part 162. As a result, the efficiency at which the green light LG is used may decrease.

The light-incident-side polarizer 172 is provided in the optical path of the green light LG output from the parallelizing part 162, and is disposed at the +D2 side of the parallelizing part 162 at a position where the light-incident-side polarizer 172 overlaps with the parallelizing part 162 in the D1 and D3 directions, as shown in FIGS. 1 to 3. The light-incident-side polarizer 172 is in contact, for example, with the light modulator 182 at the +D2 side, and may instead be disposed at an appropriate distance from the light modulator 182 in the D2 direction.

The light-incident-side polarizer 172 corresponds to a second polarizer, and outputs predetermined polarized light out of the green light LG output from the parallelizing part 162 toward the +D2 side along the D2 direction. The predetermined polarized light corresponds to a second polarized component, and is, for example, S-polarized light. The light-incident-side polarizer 172 is, for example, a reflective polarizing plate having plate surfaces parallel to the plane containing the D1 and D3 directions. The light-incident-side polarizer 172 transmits part of the incident green light LG that is green light LG containing the predetermined polarized light toward the +D2 side, and reflects the other part of the green light LG toward the -D2 side.

The green light LG output from the light source 122 is randomly polarized light containing at least P polarized light and S polarized light, as shown in detail in FIG. 3. Green light LGS, which is the S-polarized component of the green light LG output from the light source 122, and green light LGP, which is the P-polarized component of the green light LG, pass through the light guiding part 142, which homogenizes the illuminance distribution of the green light LGS and LGP in the plane containing the D1 and D3 directions, and the resultant green light exits toward the +D2 side of the light guiding part 142. The green light LGS and the green light LGP pass through the parallelizing part 162 and are parallelized by the parallelizing part 162. The parallelized green light LGS and green light LGP enter the light-incident-side polarizer 172 from the -D2 side. The green light LGS passes through the light-incident-side polarizer 172 and exits toward the +D2 side of the light-incident-side polarizer 172. The green light LGP is reflected off a light incident surface 172a of the light-incident-side polarizer 172 and exits toward the -D2 side of the light-incident-side polarizer 172.

The green light LGP reflected off the light-incident-side polarizer 172 toward the -D2 side sequentially passes through the parallelizing part 162 and the light guiding part 142, travels toward the -D2 side along the D2 direction, is collected in the plane containing the D1 and D3 directions, and enters the phosphor 124 in the light source 122 from the +D2 side. The phosphor 124 is excited again by the green light LGP output from the light-incident-side polarizer 172 toward the -D2 side, and emits the green light LG containing the green light LGS and LGP again via the light exiting surface 124a toward the +D2 side. Since the light-incident-side polarizer 172 is configured with a reflective polarizing plate, the polarized green light LG that does not pass through the light-incident-side polarizer 172 enters again the phosphor 124 in the light source 122, and contributes to the excitation of and the light emission from the phosphor 124. As a result, the green light LG is used in the green light emitter 102 and the projector 301 at improved efficiency.

The light modulator 182 is provided in the optical path of the green light LG output from the light-incident-side polarizer 172, and is disposed at the +D2 side of the light-incident-side polarizer 172 at a position where the light modulator 182 overlaps with the light-incident-side polarizer 172 in the D1 and D3 directions. The light modulator 182 corresponds to a second light modulator, and modulates the green light LG output from the light-incident-side polarizer 172 based on image information transmitted from the image formation apparatus that is not shown but is externally coupled to the light modulator 182, such as a computer.

The light modulator 182 is, for example, a transmissive liquid crystal panel. The liquid crystal panel constituting the light modulator 182 has multiple pixels that are not shown. The pixels each include a switching element. The switching element is, for example, a TFT. An electric signal according to the brightness of the green light at the relative position of each of the pixels at the light modulation surface of the light modulator 182 in an image projected by the projector 301 is supplied to the switching element in the pixel. The pixels each modulate the vibration direction of the green light LG incident from the light-incident-side polarizer 172 with the aid of the operation of the switching element according to the electric signal described above to generate green image light IG. The image light IG corresponds to second light. The light modulator 182 outputs the image light IG generated by the liquid crystal panel toward the +D2 side along the D2 direction.

The light-exiting-side polarizer 176 is provided in the optical path of the image light IG output from the light modulator 182, and is disposed at the +D2 side of the light modulator 182 at a position where the light-exiting-side polarizer 175 overlaps with the light modulator 182 in the D1 and D3 directions. The light-exiting-side polarizer 176 is in contact, for example, with the light modulator 182 at the +D2 side, and may instead be disposed at an appropriate distance from the light modulator 182 in the D2 direction. The light-exiting-side polarizer 176 corresponds to a fifth polarizer, and outputs predetermined polarized light out of the image light IG output from the light modulator 182 toward the +D2 side along the D2 direction. The predetermined polarized light corresponds to a fifth polarized component, and is, for example, P-polarized light. The light-exiting-side polarizer 176 is, for example, a reflective or absorptive polarizing plate having plate surfaces parallel to the plane containing the D1 and D3 directions. The light-exiting-side polarizer 176 transmits part of the incident image light IG that is image light IG containing the predetermined polarized light toward the +D2 side, and reflects the other part of the image light IG toward the -D2 side.

The red light emitter 103 is disposed at the +D1 side of the green light emitter 102, and is disposed in a region where the red light emitter 103 overlaps with the blue light emitter 101 in the D2 and D3 directions, as shown in FIG. 1. The red light emitter 103 emits the red light LR. The red light LR emitted from the red light emitter 103 travels toward the -D1 side along the D1 direction.

The red light emitter 103 includes a light source 123, a light guiding part 143, and a parallelizing part 163. The light source 123 is supported by a substrate 113. The light source 123 is provided at the -D1-side plate surface of the substrate 113 out of the plate surfaces of the substrate 113 that are parallel to a plane containing the D2 and D3 directions. The light emission surface of the light source 123 is disposed substantially in parallel to the plane containing the D2 and D3 directions, and is a surface opposite in the D1 direction to the surface of the light source 123 that is in contact with the -D1-side plate surface of the substrate 113. The light source 123 corresponds to a third light source, and outputs the red light LR in the red wavelength band in the visible wavelength band. The red wavelength band is, for example, a wavelength band ranging from 610 nm to 700 nm.

The light source 123 is configured, for example, with an LED that emits the red light LR. Note that the light source 123 may be configured with one LED or multiple LEDs as a whole. When the light source 123 is configured with multiple LEDs, the multiple LEDs are arranged in the region occupied by the light source 123 in the plane containing the D2 and D3 directions.

The substrate 113 is made, for example, of metal, and also acts as a heat dissipation member that receives heat from the light source 123 outputting the red light LR and dissipates the heat to an external space.

The light guiding part 143 is provided in the optical path of the red light LR output from the light source 123, and is disposed at the -D1 side of the light source 123 at a position where the light guiding part 143 overlaps with the light source 123 in the D2 and D3 directions. The light guiding part 143 corresponds to a third light guiding part, and has a light incident end 143a at the +D1 side in the D1 direction, a light exiting end 143b at the -D1 side in the D1 direction, and a side surface 143s and a reflection surface 143r extending between the light incident end 143a and the light exiting end 143b in the D1 direction. The light incident end 143a corresponds to a third light incident end and spreads in parallel to the plane containing the D2 and D3 directions. The shape of the light incident end 143a viewed in the D1 direction is the same as the shape of the light emission surface of the light source 123 viewed in the same direction, and is, for example, a rectangular shape. The size of the light incident end 143a in the plane containing the D2 and D3 directions may be equal to the size of the light emission surface of the light source 123 in the plane containing the D2 and D3 directions, and is preferably appropriately greater than the size of the light emission surface of the light source 123 in the plane containing the D2 and D3 directions. The light exiting end 143b corresponds to a third light exiting end, spreads in parallel to the plane containing the D2 and D3 directions, and is larger than the light incident end 143a. The shape of the light exiting end 143b viewed in the D1 direction is the same as the shape of the light modulation surface of the light modulator 183 viewed in the same direction, and is, for example, a rectangular shape. The size of the light exiting end 143b in the plane containing the D2 and D3 directions is equal to the size of the light modulation surface of the light modulator 183 in the plane containing the D2 and D3 directions. The side surface 143s and the reflection surface 143r couple the periphery of the light incident end 143a and the periphery of the light exiting end 143b in the D1 direction.

The red light LR output from the light source 123 enters the light guiding part 143 via the light incident end 143a. In the light guiding part 143, the region surrounded by the light incident end 143a, the light exiting end 143b, and the reflection surface 143r is a region through which the red light LR propagates. The size of the region surrounded by the light incident end 143a, the light exiting end 143b, and the reflection surface 143r in the plane containing the D2 and D3 directions increases as the region extends from the +D1 side toward the -D1 side in the D1 direction. In addition, the shape of the region surrounded by the light incident end 143a, the light exiting end 143b, and the reflection surface 143r in the plane containing the D2 and D3 directions changes from the shape of the light emission surface of the light source 123 to the shape of the light modulation surface of the light modulator 183 viewed in the D1 direction with the distance from the +D1 side toward the -D1 side.

The side surface 143s of the light guiding part 143 and the reflection surface 143r provided at the side surface 143s as will be described later incline by a predetermined angle with respect to an imaginary line VX perpendicular to the light incident end 143a and the optical axis of the light guiding part 143, and are separate from the imaginary line in the plane containing the D2 and D3 directions as the side surface 143s and the reflection surface 141r extend from the -D1 side toward the +D1 side. The green light LG having entered the light guiding part 142 propagates from the +D1 side toward the -D1 side in the region surrounded by the light incident end 143a, the light exiting end 143b, and the reflection surface 143r.

When the light modulation surface of the light modulator 183 has a rectangular shape when viewed along the D1 direction, the shape of the light emission surface of the light source 123 viewed along the D1 direction is also matched with the rectangular shape. In this case, it is preferable that the predetermined angle α of the side surface 143s and the reflection surface 143r containing the short sides of the rectangular shape with respect to the imaginary line and the optical axis described above falls within the range from 7° to 22°. It is preferable that the predetermined angle β of the side surface 143s and the reflection surface 143r containing the long sides of the rectangular shape with respect to the imaginary line and the optical axis described above falls within the range from 14° to 36°.

Part of the red light LR having entered the light guiding part 143 inclines by angles smaller than the predetermined angle with respect to the imaginary line and the optical axis of the light guiding part 143, and propagates directly from the light incident end 143a to the light exiting end 143b without being incident on the reflection surface 143r even once. The remaining part of the red light LR having entered the light guiding part 143 inclines by angles greater than or equal to the predetermined angle with respect to the imaginary line and the optical axis of the light guiding part 143, is incident on the reflection surface 143r via the light incident end 143a once or a greater number of times, is reflected off the reflection surface 143r, and then reaches the light exiting end 143b. The path of the beams constituting the red light LR in the region surrounded by the light incident end 143a, the light exiting end 143b, and the reflection surface 143r varies in accordance with the angles of incidence of the beams with respect to the light incident end 143a, and there are multiple paths along which the beams are reflected off the reflection surface 143r by different numbers of times. The illuminance distribution of the red light LR having propagated through the region surrounded by the light incident end 143a, the light exiting end 143b, and the reflection surface 143r is therefore homogenized in the plane containing the D2 and D3 directions. That is, the light guiding part 143 homogenizes the illuminance distribution of the incident red light LR in the planes containing the D2 and D3 directions. The red light LR having the homogenized illuminance distribution exits via the light exiting end 143b toward the -D1 side.

The light guiding part 143 is a hollow reflector configured with plate-shaped members made of a transparent material such as optical glass, as the light guiding parts 141 and 142. When viewed along the D1 direction, the +D1-side end of the frame body of the reflector has a shape and size that are the same as those of the light incident end 143a and the light emission surface of the light source 123, and is formed, for example, in the shape of a rectangular frame. The -D1-side end of the frame body of the reflector has a shape and size that are the same as those of the light exiting end 143b and the light modulation surface of the light modulator 183, and is formed, for example, in the shape of a rectangular frame having a size different from that of the +D1-side end.

The reflector configured with the light guiding part 143 is configured by coupling sides corresponding to the legs of four plate-shaped members each having a trapezoidal shape to each other. The length of the sides at the +D1 side that are parallel to the D2 or D3 direction and correspond to the upper bases of the four plate-shaped members is set in accordance with the size of the light incident end 143a and the light emission surface of the light source 123 in the D2 or D3 direction. The length of the sides at the -D1 side that are parallel to the D2 or D3 direction and correspond to the lower bases of the four plate-shaped members is set in accordance with the size of the light exiting end 143b and the light modulation surface of the light modulator 183 in the D2 or D3 direction.

To increase the reflectance in the vicinity of the side surface 143s for the red light LR having entered the light guiding part 143 via the light incident end 143a, the reflector of the light guiding part 143 is also provided with a reflection film 253 configured, for example, with a dielectric multilayer film at plate surfaces of the plate-shaped members constituting the reflector that are surfaces opposite from the side surface 143s, that is, plate surfaces of the plate-shaped members that are surfaces facing the inner space of the reflector. Part of the red light LR having entered the inner space of the reflector of the light guiding part 143 via the light incident end 143a is reflected off the reflection film 253 and travels toward the -D1 side.

The intensity of the red light LR reflected off the reflection film 253 depends in some case on the angle of incidence of the red light LR incident on the reflection film 253. When the reflection film 253 is configured with a dielectric multilayer film, the dependence of the intensity of the red light LR output from the reflection film 253 on the angle of incidence changes in accordance, for example, with the refractive index of multiple films contained in the dielectric multilayer film, the thickness of each of the films, the number of films, and other parameters. For example, when the angle α falls within the range from 7° to 22° and the angle β falls within the range from 14° to 36° as described above, the reflection film 253 is designed and the parameters of the dielectric multilayer film are appropriately determined in such a way that the angle of incidence of the red light LR output from the reflection surface 143r and the reflection film 253 at which the intensity of the red light LR is maximized falls within the range from 60° to 90°. The relationship between the angle of incidence of the red light LR to be incident on the reflection film 253 and the intensity of the red light LR output from the reflection film 253 is also derived by a numerical simulation based on the configuration of the red light emitter 103 and ray tracing.

The parallelizing part 163 is provided in the optical path of the red light LR output from the light guiding part 143, and is disposed at the -D1 side of the light guiding part 143 at a position where the parallelizing part 163 overlaps with the light guiding part 143 in the D2 and D3 directions. The parallelizing part 163 corresponds to a third parallelizing part, and parallelizes the red light LR output from the light guiding part 143 along the D1 direction.

The parallelizing part 163 is, for example, a plano-convex lens, and has a light incident surface configured with a planar surface perpendicular to the D1 direction, and a light exiting surface configured with a convex curved surface protruding toward the side toward which the red light LR exits. The focal point of the plano-convex lens constituting the parallelizing part 163 is disposed at least at the +D1 side of the parallelizing part 163, and at the side opposite from the -D1 side, where the red light LR is output from the parallelizing part 163, and further at the +D1 side of the light guiding part 143. The light incident surface of the parallelizing part 163 is in contact with the light exiting end 143b of the light guiding part 143. Since the parallelizing part 163 is in contact with the light exiting end 143b, the red light LR output via the light exiting end 143b of the light guiding part 143 is taken into the parallelizing part 163 as much as possible, so that loss of the red light LR can be suppressed. Note, however, that the parallelizing part 163 may be an optical lens capable of parallelizing the incident red light LR in place of a plano-convex lens, and may be disposed at an appropriate distance from the light guiding part 143 in the D1 direction.

A focal length f3 of the parallelizing part 163 corresponds to a third focal length, and is longer than a length g3 from the light incident end 143a to the light exiting end 143b of the light guiding part 143 in the D1 direction. The length g3 corresponds to a third length.

Although not shown, also in the red light emitter 103, when a combined vector that is the combination of multiple beams contained in the red light LR output via the light exiting end 143b toward the -D1 side is extended toward the +D1 side provided that the effect of the parallelizing part 163 is ignored, the positions where the beams intersect with the center line and the optical axis of the parallelizing part 163 and the light guiding part 143 do not coincide with each other at a single point in an exact sense, but are scattered in a region having a slight width in the D1 direction, as in the green light emitter 102. As a result, a focal point F3 of the plano-convex lens constituting the parallelizing part 163 has a slight spread in the D1 direction, but forms a macroscopically single point.

Since the focal length f3 of the parallelizing part 163 is set so as to extend toward the +D1 side of the light guiding part 143 and to be longer than the length g3 of the light guiding part 143 in consideration of the position of the focal point F3, the multiple beams contained in the red light LR are efficiently made parallel to the D1 direction.

Specifically, the focal length f3 of the parallelizing part 163 is preferably longer than or equal to 1.1 times the length g3 of the light guiding part 143. The focal length f3 is more preferably longer than or equal to 1.1 times the length g3 but shorter than or equal to 2.0 times the length g3. When the focal length f3 is set so as to fall within the range described above, the red light LR output from the light source 123 is efficiently parallelized, so that the red light LR is used at improved efficiency. A preferable range of the focal length f3 is also ascertained by a numerical simulation based on the configuration of the red light emitter 103 and ray tracing.

When the focal length f3 of the parallelizing part 163 is shorter than 1.1 times the length g3 of the light guiding part 143, the range illuminated with the red light LR output from the parallelizing part 163 is excessively reduced, so that a part of the original image may not be displayed when the image light as a result of the conversion performed by the downstream light modulator 183 is enlarged, projected, and displayed on the screen SC. On the other hand, when the focal length f3 is longer than 2.0 times the length g3, part of the red light LR output from the parallelizing part 163 does not enter the light modulator 183 disposed downstream from the parallelizing part 163. As a result, the efficiency at which the red light LR is used may decrease.

The light-incident-side polarizer 173 is provided in the optical path of the red light LR output from the parallelizing part 163, and is disposed at the -D1 side of the parallelizing part 163 at a position where the light-incident-side polarizer 173 overlaps with the parallelizing part 163 in the D2 and D3 directions. The light-incident-side polarizer 173 is in contact, for example, with the light modulator 183 at the +D1 side, and may instead be disposed at an appropriate distance from the light modulator 183 in the D1 direction.

The light-incident-side polarizer 173 corresponds to a third polarizer, and outputs predetermined polarized light out of the red light LR output from the parallelizing part 163 toward the -D1 side along the D1 direction. The predetermined polarized light corresponds to a third polarized component, and is, for example, S-polarized light. The light-incident-side polarizer 173 is, for example, a reflective polarizing plate having plate surfaces parallel to the plane containing the D2 and D3 directions. The light-incident-side polarizer 173 transmits part of the incident red light LR that is red light LR containing the predetermined polarized light toward the -D1 side, and reflects the other part of the red light LR toward the +D1 side.

The red light LR output from the light source 123 contains at least P polarized light and S polarized light and is, for example, randomly polarized light. The P-polarized component of the red light LR output from the light source 123 sequentially passes through the light guiding part 143 and the parallelizing part 163 as described above, passes through the light-incident-side polarizer 173, and exits toward the -D1 side of the light-incident-side polarizer 173. The S-polarized component of the red light LR sequentially passes through the light guiding part 143 and the parallelizing part 163, as the P-polarized component, but is reflected off the light incident surface of the light-incident-side polarizer 173 and exits toward the +D1 side of the light-incident-side polarizer 173.

The light modulator 183 is provided in the optical path of the red light LR output from the light-incident-side polarizer 173, and is disposed at the -D1 side of the light-incident-side polarizer 173 at a position where the light modulator 183 overlaps with the light-incident-side polarizer 173 in the D2 and D3 directions. The light modulator 183 corresponds to a third light modulator, and modulates the red light LR output from the light-incident-side polarizer 173 based on image information transmitted from the image formation apparatus that is not shown but is externally coupled to the light modulator 183, such as a computer.

The light modulator 183 is, for example, a transmissive liquid crystal panel. The liquid crystal panel constituting the light modulator 183 includes multiple pixels that are not shown. The pixels each include a switching element. The switching element is, for example, a TFT. An electric signal according to the brightness of the red light at the relative position of each of the pixels at the light modulation surface of the light modulator 183 in an image projected by the projector 301 is supplied to the switching element in the pixel. The pixels each modulate the vibration direction of the red light LR incident from the light-incident-side polarizer 173 with the aid of the operation of the switching element according to the electric signal described above to generate red image light IR. The image light IR corresponds to third light. The light modulator 183 outputs the image light IR generated by the liquid crystal panel toward the -D1 side along the D1 direction.

The light-exiting-side polarizer 177 is provided in the optical path of the image light IR output from the light modulator 183, and is disposed at the -D1 side of the light modulator 183 at a position where the light-exiting-side polarizer 177 overlaps with the light modulator 183 in the D2 and D3 directions. The light-exiting-side polarizer 177 is in contact, for example, with the light modulator 183 at the -D1 side, and may instead be disposed at an appropriate distance from the light modulator 183 in the D1 direction. The light-exiting-side polarizer 177 corresponds to a sixth polarizer, and outputs predetermined polarized light out of the image light IR output from the light modulator 183 toward the -D1 side along the D1 direction. The predetermined polarized light corresponds to a sixth polarized component, and is, for example, P-polarized light. The light-exiting-side polarizer 177 is, for example, a reflective or absorptive polarizing plate having plate surfaces parallel to the plane containing the D2 and D3 directions. The light-exiting-side polarizer 177 transmits part of the incident image light IR that is image light IR containing the predetermined polarized light toward the -D1 side, and reflects the other part of the image light IR toward the +D1 side.

The light combiner 200 is disposed in a region where the optical path of the blue image light IB output from the light-exiting-side polarizer 175, the optical path of the green image light IG output from the light-exiting-side polarizer 176, and the optical path of the red image light IR output from the light-exiting-side polarizer 177 intersect with one another. The light combiner 200 combines the image light IB, the image light IG, and the image light IR output from the light-exiting-side polarizers 175, 176, and 177 with one another, and outputs the combined image light toward the +D2 side along the D2 direction.

The light combiner 200 is, for example, a cross dichroic prism 210. The cross dichroic prism 210 has a light incident surface 210c facing the light exiting surface of the light-exiting-side polarizer 175, a light incident surface 210d facing the light exiting surface of the light-exiting-side polarizer 176, a light incident surface 210e facing the light exiting surface of the light-exiting-side polarizer 177, a light exiting surface 210b, and two reflection films 211 and 212. The light incident surfaces 210c and 210e are parallel to a plane containing the D2 and D3 directions, and coincide with each other in the D2 and D3 directions. The light incident surface 210d and the light exiting surface 210b are parallel to a plane containing the D1 and D3 directions, and coincide with each other in the D1 and D3 directions.

The reflection film 211 is disposed so as to extend from the +D2 side toward the -D2 side as extending from the -D1 side toward the +D1 side when viewed along the D3 direction. The reflection film 212 is disposed so as to extend from the -D2 side toward the +D2 side as extending from the -D1 side toward the +D1 side when viewed along the D3 direction. The reflection films 211 and 212 coincide with the light incident surfaces 210c and 210e in the D1 direction and coincide with the light exiting surface 210b and the light incident surface 210d in the D2 direction. The reflection film 211 reflects the light in blue wavelength band and transmits the light in the green wavelength band and the red wavelength band. The reflection film 212 reflects the light in the red wavelength band and transmits the light in the blue wavelength band and the green wavelength band.

The cross dichroic prism 210 is so configured that, when viewed in the D3 direction, four rectangular prisms are glued to each other along the right angle forming surfaces with the right-angle vertices positioned at the center of the light combiner 200. The four rectangular prisms of the cross dichroic prism 210 are made of a transparent material that transmits light in the visible wavelength band. The reflection film 211 is disposed at the right angle forming surfaces that extends from the +D2 side toward the -D2 side as extending from the -D1 side toward the +D1 side as described above out of the right angle forming surfaces of the four rectangular prisms, and is configured, for example, with a dielectric multilayer film. The reflection film 212 is disposed at the right angle forming surfaces that extends from the -D2 side toward the +D2 side as extending from the -D1 side toward the +D1 side as described above out of the right angle forming surfaces of the four rectangular prisms.

The P-polarized blue image light IB output from the light-exiting-side polarizer 175 enters the interior of the cross dichroic prism 210 via the light incident surface 210c toward the +D1 side along the D1 direction, passes through the reflection film 211, is reflected off the reflection film 212, and travels toward the +D2 side. The P-polarized green image light IG output from the light-exiting-side polarizer 176 enters the interior of the cross dichroic prism 210 via the light incident surface 210d toward the +D2 side along the D2 direction, passes through the reflection films 211 and 212, and travels straight toward the +D2 side. The P-polarized red image light IR output from the light-exiting-side polarizer 177 enters the interior of the cross dichroic prism 210 via the light incident surface 210e toward the -D1 side along the D1 direction, passes through the reflection film 212, is reflected off the reflection film 211, and travels toward the +D2 side. The image light IB, the image light IG, and the image light IR output from the reflection films 211 and 212 of the cross dichroic prism 210 toward the +D2 side are combined with one another to generate full-color image light IM. The cross dichroic prism 210 outputs the full-color image light IM via the light exiting surface 210b toward the +D2 side along the D2 direction.

The projection system 250 is disposed in the optical path of the image light IM output from the light combiner 200. The projection system 250 projects the image light IM output from the projection system 250 onto the screen SC disposed at the +D2 side, enlarges images transmitted from the image formation apparatus to the light modulators 181, 182, and 183, and displays the enlarged images on the screen SC.

The projection system 250 is configured, for example, with one or more optical lenses arranged along the D2 direction. Examples of the optical lenses may include a plano-convex lens, a plano-concave lens, a biconvex lens, biconcave lens, a meniscus lens, an aspherical lens, and a freeform surface lens.

The projector 301 according to the present embodiment described above includes the light source (first light source) 121, the light source (second light source) 122, the light source (third light source) 123, the light guiding part (first light guiding part) 141, the light guiding part (second light guiding part) 142, the light guiding part (third light guiding part) 143, the parallelizing part (first parallelizing part) 161, the parallelizing part (second parallelizing part) 162, the parallelizing part (third parallelizing part) 163, the light modulator (first light modulator) 181, the light modulator (second light modulator) 182, the light modulator (third light modulator) 183, the light combiner 200, and the projection system 250. The light source 121 outputs the blue light (first light) LB in the blue wavelength band (first wavelength band). The light source 122 outputs the green light (second light) LG in the green wavelength band (second wavelength band) different from the blue wavelength band. The light source 123 outputs the red light (third light) LR in the red wavelength band (third wavelength band) different from the blue wavelength band and the green wavelength band. The light guiding part 141 has the light incident end (first light incident end) 141a, on which the blue light LB output from the light source 121 is incident, and the light exiting end (first light exiting end) 141b, via which the blue light LB exits, and homogenizes the illuminance of the blue light LB in a plane containing the D2 and D3 directions (in-plane illuminance). The light guiding part 142 has the light incident end (second light incident end) 142a, on which the green light LG output from the light source 122 is incident, and the light exiting end (second light exiting end) 142b, via which the green light LG exits, and homogenizes the illuminance of the green light LG in a plane containing the D1 and D3 directions (in-plane illuminance). The light guiding part 143 has the light incident end (third light incident end) 143a, on which the red light LR output from the light source 123 is incident, and the light exiting end (third light exiting end) 143b, via which the red light LR exits, and homogenizes the illuminance of the red light LR in a plane containing the D1 and D3 directions (in-plane illuminance). The light modulator (first light modulator) 181 modulates the blue light LB output from the parallelizing part 161 based on image information. The light modulator (second light modulator) 182 modulates the green light LG output from the parallelizing part 162 based on image information. The light modulator (third light modulator) 183 modulates the red light LR output from the parallelizing part 163 based on image information. The light combiner 200 combines the image light (first light) IB output from the light modulator 181, the image light (second light) IG output from the light modulator 182, and the image light (third light) IR output from the light modulator 183 with one another and outputs the combined light. The projection system 250 projects the image light (light) IM output from the light combiner 200. In the projector 301 according to the present embodiment, the focal length (first focal length) f1 of the parallelizing part 161 is longer than the length (first length) g1 in the D1 direction from the light incident end 141a to the light exiting end 141b of the light guiding part 141. The focal length (second focal length) f2 of the parallelizing part 162 is longer than the length (second length) g2 in the D2 direction from the light incident end 142a to the light exiting end 142b of the light guiding part 142. The focal length (third focal length) f3 of the parallelizing part 163 is longer than the length (third length) g3 in the D1 direction from the light incident end 143a to the light exiting end 143b of the light guiding part 143.

In the projector 301 according to the present embodiment, the three types of color light output from the light sources 121, 122, and 123, that is, the blue light LB, the green light LG, and the red light LR are directly converted into the image light IB, the image light IG, and the image light IR by the light modulators 181, 182, and 183, and the image light IB, the image light IG, and the image light IR are combined with one another by the light combiner 200, and the generated full-color image light IM is projected. On the other hand, a projector of related art generates white light, separates the white light into three types of color light with the aid of a color separator or a color separation system, converts each of the three types of color light into image light with the aid of a light modulator, combines the three types of image light with one another into full-color image light with the aid of a light combiner, and projects the full-color image light. In the projector 301 according to the present embodiment, it is not necessary to provide at a position upstream from the light modulators corresponding to the three types of color light a color combiner or a light combining system that combines the three types of color light into white light, or a color separator or a color separation system that separates the white light into the three types of color light, so that the number of parts, the number of apparatuses, and an increase in size of the projector can be suppressed as compared with the projector of related art. The projector 301 according to the present embodiment can be reduced in size as compared with the projector of related art.

In the projector 301 according to the present embodiment, since the focal length f1 of the parallelizing part 161 is longer than the length g1 of the light guiding part 141, the focal length f2 of the parallelizing part 162 is longer than the length g2 of the light guiding part 142, and the focal length f3 of the parallelizing part 163 is longer than the length g3 of the light guiding part 143, the parallelism of the blue light LB, the green light LG, and the red light LR output from the light guiding parts 141, 142, and 143 can be increased, so that the three types of color light can be efficiently caused to enter the parallelizing parts 161, 162, and 163, allowing the color light to be used at increased efficiency.

In the projector 301 according to the present embodiment, the light guiding parts 141 and 143 have rectangular cross-sectional shapes perpendicular to the optical axis and the D1 direction, and the light guiding part 142 has a rectangular cross-sectional shape perpendicular to the optical axis and the D2 direction.

In the projector 301 according to the present embodiment, the light guiding parts 141, 142, and 143 can readily generate the blue light LB, the green light LG, and the red light LR each having a rectangular shape and homogenized illuminance in a plane perpendicular to the optical axis of the color light. The projector 301 according to the present embodiment can readily generate color light having a shape that matches the rectangular light modulation surface of each of the light modulators 181, 182, and 183.

The projector 301 according to the present embodiment further includes the light-incident-side polarizer (first polarizer) 171, the light-incident-side polarizer (second polarizer) 172, and the light-incident-side polarizer (third polarizer) 173. The light-incident-side polarizer 171 is disposed between the parallelizing part 161 and the light modulator 181, transmits part of the blue light LB that is blue light LB containing the S-polarized component (first polarized component), and reflects the P-polarized component that is the other part of the blue light LB. In the projector 301 according to the present embodiment, the light-incident-side polarizer 172 is disposed between the parallelizing part 162 and the light modulator 182, transmits part of the green light LG that is green light LG containing the S-polarized component (second polarized component), and reflects the P-polarized component that is the other part of the green light LG. The light-incident-side polarizer 173 is disposed between the parallelizing part 163 and the light modulator 183, transmits part of the red light LR that is red light LR containing the S-polarized component (third polarized component), and reflects the P-polarized component that is the other part of the red light LR. In the projector 301 according to the present embodiment, the other part of the blue light LB enters the light guiding part 141 and travels toward the light source 121. The other part of the green light LG enters the light guiding part 142 and travels toward the light source 122. The other part of the red light LR enters the light guiding part 143 and travels toward the light source 123.

The projector 301 according to the present embodiment allows the other parts of the blue light LB, the green light LG, and the red light LR reflected off the light-incident-side polarizers 171, 172, and 173 and output from the light-incident-side polarizers 171, 172, and 173 to enter the light sources 121, 122, and 123. For example, when the light source 122 out of the light sources 121, 122, and 123 includes the phosphor 124, the other part of the green light LG traveling toward the light source 122 enters the phosphor 124 and contributes to the excitation of the phosphor 124. When the substrates 111, 112, and 113 of the light sources 121, 122, and 123 have reflectivity, the other parts of the blue light LB, the green light LG, and the red light LR traveling toward the light sources 121, 122, and 123 are reflected off the substrates 111, 112, and 113, enter the light guiding parts 141, 142, and 143 again, and are used therein. In the projector 301 according to the present embodiment, since the other parts of the blue light LB, the green light LG, and the red light LR reflected off the light-incident-side polarizers 171, 172, and 173 are caused to enter the light guiding parts 141, 142, and 143 again, the blue light LB, the green light LG, and the red light LR can be used at increased efficiency.

In the projector 301 according to the present embodiment, a cross-sectional area of the light exiting end 141b of the light guiding part 141, the cross-sectional area containing the D2 and D3 directions, is greater than a cross-sectional area of the light incident end 141a of the light guiding part 141, the cross-sectional area containing the same directions. A cross-sectional area of the light exiting end 142b of the light guiding part 142, the cross-sectional area containing the D1 and D3 directions, is greater than a cross-sectional area of the light incident end 142a of the light guiding part 142, the cross-sectional area containing the same directions. A cross-sectional area of the light exiting end 143b of the light guiding part 143, the cross-sectional area containing the D2 and D3 directions, is greater than a cross-sectional area of the light incident end 143a of the light guiding part 143, the cross-sectional area containing the same directions.

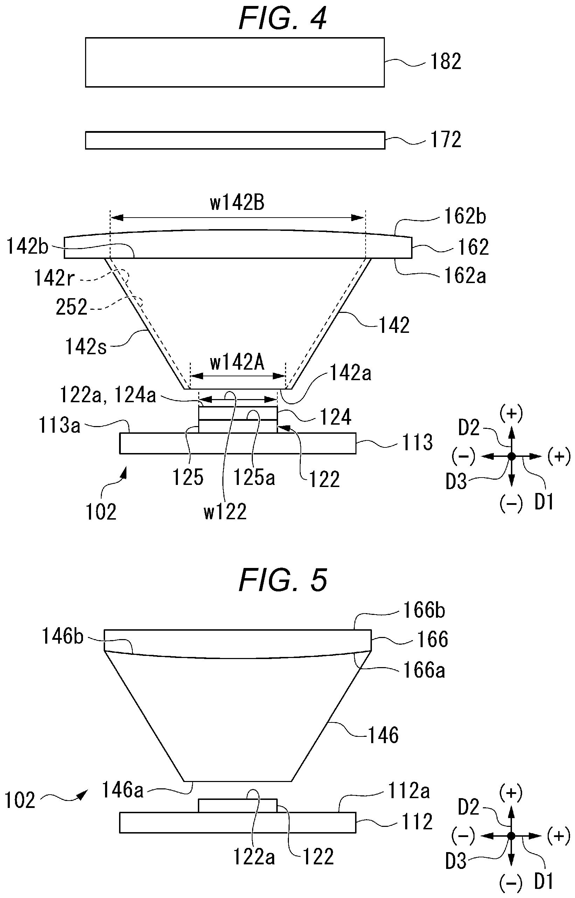

FIG. 4 is a schematic view of the green light emitter 102, the light-incident-side polarizer 172, and the light modulator 182 as an example. FIGS. 3 and 4 show a variation of the projector 301 according to the present embodiment in which the light-incident-side polarizer 172 is disposed at a distance from the parallelizing part 162 in the D2 direction, and the light modulator 182 is disposed at a distance from the light-incident-side polarizer 172 in the D2 direction. As shown in FIG. 4 and described above, for example, a width w142A of the light incident end 142a of the light guiding part 142 in the D1 direction is set in accordance with a width w122 of the light emission surface 122a of the light source 122 in the D1 direction. The width w142B of the light exiting end 142b of the light guiding part 142 in the D1 direction is greater than the width w142A of the light incident end 142a of the light guiding part 142 in the D1 direction. Although not shown, the width and cross-sectional area of the light exiting end 142b of the light guiding part 142 in the D1 direction are greater than the width and cross-sectional area of the light incident end 142a of the light guiding part 142 in the D1 direction.

In the projector 301 according to the present embodiment, the illuminance distributions of the blue light LB, the green light LG, and the red light LR are homogenized, and the color light irradiated areas are increased during the period from the time when the three types of color light are incident on the light incident ends 141a, 142a, and 143a of the light guiding parts 141, 142, and 143 to the time when the three types of color light exit via the light exiting ends 141b, 142b, and 143b thereof. The projector 301 according to the present embodiment readily allows the sizes of the blue light LB, the green light LG, and the red light LR output from the light sources 121, 122, and 123 having light emission surface smaller than the light modulation surfaces of the respective light modulators 181, 182, and 183, that is, the areas irradiated with the blue light LB, the green light LG, and the red light L in a plane perpendicular to the optical axes to be increased in accordance with the light modulation surfaces of the respective light modulators 181, 182, and 183.

In the projector 301 according to the present embodiment, the length from the light incident end 141a to the light exiting end 141b of the light guiding part 141 is greater than or equal to 8 mm but shorter than or equal 25 mm. The second distance from the light incident end 142a to the light exiting end 142b of the light guiding part 142 is greater than or equal to 8 mm but shorter than or equal 25 mm. The length from the light incident end 143a to the light exiting end 143b of the light guiding part 143 is greater than or equal to 8 mm but shorter than or equal 25 mm.

The projector 301 according to the present embodiment can increase the efficiency at which the light guiding parts 141, 142, and 143 take out the blue light LB, the green light LG, and the red light LR, and the uniformity of the illuminance distributions of the blue light LB, the green light LG, and the red light LR.

In the projector 301 according to the present embodiment, the length g1 of the light guiding part 141 and the focal length f1 of the parallelizing part 161 satisfy 1.1 × g1 ≤ f1 ≤ 2.0 × g1. The length g2 of the light guiding part 142 and the focal length f2 of the parallelizing part 162 satisfy 1.1 × g2 <_ f2 <_ 2.0 × g2. The length g3 of the light guiding part 143 and the focal length f3 of the parallelizing part 163 satisfy 1.1 × g3 <_ f3 <_ 2.0 × g3.

In the projector 301 according to the present embodiment, the blue light LB, the green light LG, and the red light LR output from the light guiding parts 141, 142, and 143 are allowed to more efficiently enter the parallelizing parts 161, 162, and 163, so that the blue light LB, the green light LG, and the red light LR can be used at increased efficiency.

In the projector 301 according to the present embodiment, the focal point F1 of the parallelizing part 161 is located at the -D1 side of the light source 121, that is, at the side opposite from the side via which the light source 121 outputs the blue light LB. The focal point F2 of the parallelizing part 162 is located at the -D2 side of the light source 122, that is, at the side opposite from the side via which the light source 122 outputs the green light LG. The focal point F3 of the parallelizing part 163 is located at the +D1 side of the light source 123, that is, at the side opposite from the side via which the light source 123 outputs the red light LR.

In the projector 301 according to the present embodiment, the blue light LB, the green light LG, and the red light LR output from the light guiding parts 141, 142, and 143 are allowed to efficiently enter the parallelizing parts 161, 162, and 163, so that the blue light LB, the green light LG, and the red light LR can be used at increased efficiency.

In the projector 301 according to the present embodiment, when the length g1 of the light guiding part 141 is 1, the distance in the D1 direction between the position of the focal point F1 of the parallelizing part 161 and the light exiting surface of the light source 121 via which the blue light LB is output is longer than or equal to 0.1 but shorter than or equal to 0.5. When the length g2 of the light guiding part 142 is 1, the distance in the D2 direction between the position of the focal point F2 of the parallelizing part 162 and the light emission surface (light exiting surface) 122a of the light source 122 via which the green light LG is output is longer than or equal to 0.1 but shorter than or equal to 0.5. FIG. 2 can be referred to. When the length g3 of the light guiding part 143 is 1, the distance in the D1 direction between the position of the focal point F3 of the parallelizing part 163 and the light exiting surface of the light source 123 via which the red light LR is output is longer than or equal to 0.1 but shorter than or equal to 0.5.

In the projector 301 according to the present embodiment, the amounts of blue light LB, green light LG, and red light LR that is truncated by the parallelizing parts 161, 162, and 163 are reduced, so that the blue light LB, the green light LG, and the red light LR can be used at increased efficiency.

In the projector 301 according to the present embodiment, the light guiding parts 141, 142, and 143 are made of glass, such as optical glass, or metal glass.

In the projector 301 according to the present embodiment, the light guiding parts 141, 142, and 143 are each configured with plate-shaped members made of a transparent material including glass such as optical glass, as described above. The projector 301 according to the present embodiment allows enhancement of the heat dissipation and heat resistance of the light guiding parts 141, 142, and 143.

As a variation of the projector 301 according to the present embodiment, the plate-shaped members that constitute the light guiding parts 141, 142, and 143 may be made of metal. That is, the reflectors of the light guiding parts 141, 142, and 143 may be configured with plate-shaped members made of a reflective material such as a metal material that reflects the blue light LB, the green light LG, and the red light LR. In this case, the plate surfaces of the plate-shaped members that face the inner spaces of the reflectors act as the reflection surfaces 141r, 142r, and 143r, as in the case where reflection films are provided at the plate surfaces of the plate-shaped members made of the transparent material that face the inner spaces. Part of the blue light LB, the green light LG, and the red light LR having entered the inner spaces of the reflectors of the light guiding parts 141, 142, and 143 via the light incident ends 141a, 142a, and 143a is reflected off the plate surfaces of the plate-shaped members that face the inner spaces of the reflectors, and travels along the optical axis. The variation of the projector 301 according to the present embodiment also allows enhancement of the heat dissipation and heat resistance of the light guiding parts 141, 142, and 143.

In the projector 301 according to the present embodiment, the light guiding parts 141, 142, and 143 are hollow, and the reflection films 251, 252, and 253 are provided at surfaces, facing the inner space, of the plate-shaped members constituting the light guiding parts 141, 142, and 143 (inner surfaces).

In the projector 301 according to the present embodiment, part of the blue light LB, the green light LG, and the red light LR having entered the light guiding parts 141, 142, and 143 is specularly reflected off the reflection films 251, 252, and 253, and propagates through the inner spaces of the light guiding parts 141, 142, and 143. The projector 301 according to the present embodiment allows reduction in losses of the blue light LB, the green light LG, and the red light LR inside the light guiding parts 141, 142, and 143.

As another variation of the projector 301 according to the present embodiment, the light guiding parts 141, 142, and 143 may instead be solid and made of a transparent material such as optical glass. In this case, plate surfaces of the reflectors constituting the light guiding parts 141, 142, and 143 that are surfaces facing the space outside the reflector, that is, the side surfaces 141s, 142s, and 143s act as the reflection surfaces 141r, 142r, and 143r. Part of the blue light LB, the green light LG, and the red light LR having entered the reflectors of the light guiding parts 141, 142, and 143 via the light incident ends 141a, 142a, and 143a is totally reflected off the reflection surfaces 141r, 142r, and 143r facing the space outside the reflectors and travels along the optical axis. Still instead, the light guiding parts 141, 142, and 143 may be solid and made of a transparent material such as optical glass, and the reflection films 251, 252, and 253 may be provided at the side surfaces 141s, 142s, and 143s. The other variation of the projector 301 according to the present embodiment also allows reduction in losses of the blue light LB, the green light LG, and the red light LR inside the light guiding parts 141, 142, and 143.

In the projector 301 of the present embodiment, when viewed along the optical axis of the parallelizing part 161, that is, when the parallelizing part 161 is viewed along the D1 direction, the parallelizing part 161 covers the light exiting end 141b of the light guiding part 141 at the +D1 side. When viewed along the optical axis of the parallelizing part 162, that is, when the parallelizing part 162 is viewed along the D2 direction, the parallelizing part 162 covers the light exiting end 142b of the light guiding part 142 at the +D2 side. When viewed along the optical axis of the parallelizing part 163, that is, when the parallelizing part 163 is viewed along the D1 direction, the parallelizing part 163 covers the light exiting end 143b of the light guiding part 143 at the -D1 side.

In the projector 301 according to the present embodiment, the amounts of blue light LB, green light LG, and red light LR that are output via the light exiting ends 141b, 142b, and 143b of the light guiding parts 141, 142, and 143 but is truncated by the parallelizing parts 161, 162, and 163 are reduced, so that the blue light LB, the green light LG, and the red light LR can be used at increased efficiency.

As another variation of the projector 301 according to the present embodiment, the light guiding parts 141, 142, and 143 may be hollow, at least a part of the parallelizing part 161 may be accommodated in the light guiding part 141, at least a part of the parallelizing part 162 may be accommodated in the light guiding part 142, and at least a part of the parallelizing part 163 may be accommodated in the light guiding part 143.

In the aforementioned variation of the projector 301 according to the present embodiment, the parallelizing parts 161, 162, and 163 may each be configured with a plano-convex lens having a planar surface and a convex curved surface protruding toward the side on which the corresponding one of the blue light LB, the green light LG, and the red light LR is incident, or a biconvex lens having a convex curved surface protruding toward the side on which the corresponding one of the blue light LB, the green light LG, and the red light LR is incident, and the side via which the corresponding one of the blue light LB, the green light LG, and the red light LR exits.

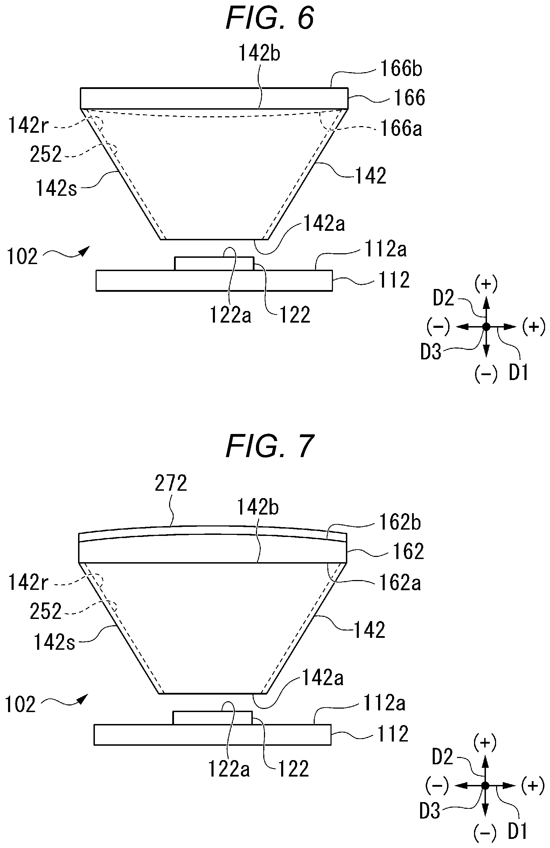

FIGS. 5 and 6 are schematic views of the green light emitter 102 in another variation of the projector 301 according to the present embodiment. In the variation shown in FIG. 5, a light guiding part 146 is provided in place of the light guiding part 142, and the light guiding part 146 is solid and is made of a transparent material. In the variation shown in FIG. 5, a light exiting end 146b of the light guiding part 146 is configured with a convex curved surface protruding toward the -D3 side, that is, the side on which the green light LG is incident. In the variation shown in FIG. 5, a parallelizing part 166 is disposed in place of the parallelizing part 162. The parallelizing part 166 is a plano-convex lens, and has a light incident surface 166a configured with a convex curved surface protruding toward the -D3 side, that is, the side on which the green light LG is incident, and a light exiting surface 166b parallel to a plane containing the D1 and D3 directions. The light exiting surface 166b of the parallelizing part 166 is in contact with the light exiting end 146b of the light guiding part 146, which is opposite from the light incident end 146a thereof in the D2 direction, and is disposed substantially in the same manner as in a state in which a part of the parallelizing part 166 that faces the side on which the green light LG is incident is accommodated in the light guiding part 146. According to the variation shown in FIG. 5, the green light LG output via the light exiting end 146b of the light guiding part 146 is efficiently taken into the parallelizing part 166, and the green light LG that is truncated by the parallelizing part 166 and is therefore not taken into the parallelizing part 166 can be minimized, so that the green light LG can be used at increased efficiency. The configuration shown in FIG. 5 is applicable to the blue light emitter 101 and the red light emitter 103 of the projector 301 according to the present embodiment.

In the variation shown in FIG. 6, the light guiding part 142 is hollow, the parallelizing part 166 is disposed in place of the parallelizing part 162, and part of the parallelizing part 166 that faces the side on which the green light LG is incident is accommodated in the inner space of the light guiding part 142. According to the variation shown in FIG. 6, the green light LG output via the light exiting end 142b of the light guiding part 142 is efficiently taken into the parallelizing part 166 at the -D2 side, and the green light LG that is truncated by the parallelizing part 166 and is therefore not taken into the parallelizing part 166 can be minimized, so that the green light LG can be used at increased efficiency. The configuration shown in FIG. 6 is also applicable to the blue light emitter 101 and the red light emitter 103 of the projector 301 according to the present embodiment.

As another variation of the projector 301 according to the present embodiment, the light-incident-side polarizer (first polarizer) of the blue light emitter 101 may be fixed to the parallelizing part 161. The light-incident-side polarizer (second polarizer) of the green light emitter 102 may be fixed to the parallelizing part 162. The light-incident-side polarizer (third polarizer) of the red light emitter 103 may be fixed to the parallelizing part 163.

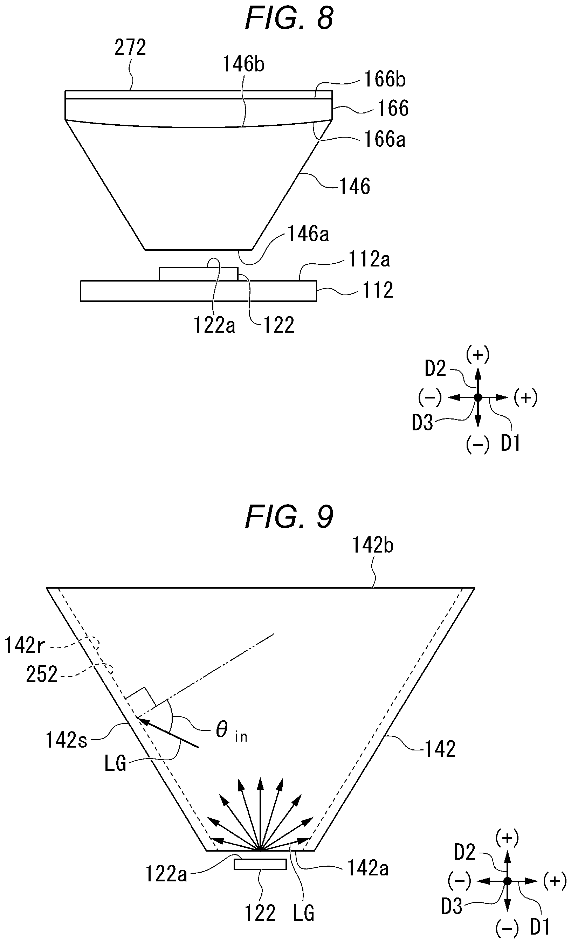

FIGS. 7 and 8 are schematic views of the green light emitter 102 in another variation of the projector 301 according to the present embodiment. In the variation shown in FIG. 7, a light-incident-side polarizer (second polarizer) 272 is provided in place of the light-incident-side polarizer 172. The light-incident-side polarizer 272 is a reflective polarizing layer or a polarizing film providing effects and advantages that are the same as those provided by the light-incident-side polarizer 172. The light-incident-side polarizer 272 is formed on the light exiting surface 162b of the parallelizing part 162 and is therefore fixed to the parallelizing part 162. According to the variation shown in FIG. 7, the space between the parallelizing part 162 and the light-incident-side polarizer 272 can be removed, so that an increase in size of each of the green light emitter 102 and the projector 301 can be suppressed. According to the variation shown in FIG. 7, since there is no interface between the air outside the parallelizing part 162 and the light-incident-side polarizer 272, loss of the green light LG can be minimized, so that the green light LG can be used at increased efficiency. The configuration shown in FIG. 7 is also applicable to the blue light emitter 101 and the red light emitter 103 of the projector 301 according to the present embodiment.

In the variation shown in FIG. 8, the light-incident-side polarizer 272 is provided in the configuration shown in FIG. 5. The light-incident-side polarizer 272 is formed on the planar light exiting surface 166b of the parallelizing part 166 and is therefore fixed to the parallelizing part 166. Also in the variation shown in FIG. 8, the space between the parallelizing part 166 and the light-incident-side polarizer 272 can be removed, so that an increase in size of each of the green light emitter 102 and the projector 301 can be suppressed. According to the variation shown in FIG. 7, since there is no interface between the air outside the parallelizing part 166 and the light-incident-side polarizer 272, loss of the green light LG can be minimized, so that the green light LG can be used at increased efficiency. The configuration shown in FIG. 8 is also applicable to the blue light emitter 101 and the red light emitter 103 of the projector 301 according to the present embodiment.

FIG. 9 is a schematic view of the light source 122 and the light guiding part 142 of the green light emitter 102. In the projector 301 according to the present embodiment, the light guiding parts 141, 142, and 143 each have a rectangular cross-sectional shape. Let α be the angle of the gradient of the side surface containing the short sides of each of the light guiding parts 141, 142, and 143, that is, an angle with respect to the optical axis, and 7° ≤ α ≤ 22° is satisfied. Let β be the angle of the gradient of the side surface containing the long sides of each of the light guiding parts 141, 142, and 143, and 14° ≤ β ≤ 36° is satisfied. The reflection films 251, 252, and 253 are provided at surfaces (inner surfaces), facing the inner space, of the plate-shaped members of the hollow light guiding parts 141, 142, and 143. Let θᵢₙ be the angles of incidence of the blue light LB, the green light LG, and the red light LR to be incident on the reflection films 251, 252, and 253 as shown in FIG. 9, the angles maximizing the reflectance of the reflection films 251, 252, and 253 for the blue light LB, the green light LG, and the red light LR, and 60° ≤ θᵢₙ ≤ 90° is satisfied.

In the projector 301 according to the present embodiment, the three types of color light are output from the light sources 121, 122, and 123 and enter the interior of the light guiding parts 141, 142, and 143 via the light incident ends 141a, 142a, and 143a along radial trajectories at predetermined angles with respect to the optical axis. Since the reflection films 251, 252, and 253 are designed as described above, the blue light LB, the green light LG, and the red light LR reflected off the reflection films 251, 252, and 253 have high intensities. The projector 301 according to the present embodiment can minimize loss of the blue light LB, the green light LG, and the red light LR in the light guiding parts 141, 142, and 143, so that the blue light LB, the green light LG, and the red light LR can be used at increased efficiency.

The projector 301 according to the present embodiment further includes the light-exiting-side polarizer (fourth polarizer) 175, the light-exiting-side polarizer (fifth polarizer) 176, and the light-exiting-side polarizer (sixth polarizer) 177. The light-exiting-side polarizer 175 is disposed between the light modulator 181 and the light combiner 200, transmits part of the image light (light) IB output from the light modulator 181 that is image light IB containing the P-polarized component (fourth polarized component), and absorbs the other part of the image light IB excluding the P-polarized component. The light-exiting-side polarizer 176 is disposed between the light modulator 182 and the light combiner 200, transmits part of the image light (light) IG output from the light modulator 182 that is image light IG containing the P-polarized component (fifth polarized component), and absorbs the other part of the image light IG excluding the P-polarized component. The light-exiting-side polarizer 177 is disposed between the light modulator 183 and the light combiner 200, transmits part of the image light (light) IR output from the light modulator 183 that is image light IR containing the P-polarized component (sixth polarized component), and absorbs the other part of the image light IR excluding the P-polarized component.

In the projector 301 according to the present embodiment, for example, the light-exiting-side polarizers 175, 176, and 177 each configured with an absorptive polarizing plate or polarizer can cause the P polarized component of the image light IB, IG, and IR to enter the light combiner 200, absorb the other part of the image light IB, IG, and IR excluding the P polarized component, and therefore prevent the other part of the image light IB, IG, and IR from forming return light and stray light directed back to the light modulators 181, 182, and 183.

A preferable embodiment of the present disclosure has been described above in detail. The present disclosure is, however, not limited to the specific embodiment, and a variety of modifications and changes can be made to the embodiment within the scope of the substance of the present disclosure described in the claims.

For example, in the blue light emitter 101 and the red light emitter 103, the LEDs constituting the light sources 121 and 123 may contain phosphors that are excited by the light from the LED bodies to emit the blue light LB and the red light LR, as in the green light emitter 102. Furthermore, the LED constituting the light source 122 of the green light emitter 102 may not contain the phosphor 124, and the light source 122 may be configured with an LED that directly emits the green light LG. The polarized component passing through the light-incident-side polarizing plate disposed in the optical path of each of the three types of color light may or may not be a component common to the three types of color light.

### Summary of the present disclosure

The present disclosure is summarized below as additional remarks.

(Additional remark 1) A projector including: a first light source configured to output first light in a first wavelength band; a second light source configured to output second light in a second wavelength band different from the first wavelength band; a third light source configured to output third light in a third wavelength band different from the first and second wavelength bands; a first light guiding part having a first light incident end on which the first light output from the first light source is incident and a first light exiting end via which the first light exits, the first light guiding part configured to homogenize in-plane illuminance of the first light; a second light guiding part having a second light incident end on which the second light output from the second light source is incident and a second light exiting end via which the second light exits, the second light guiding part configured to homogenize in-plane illuminance of the second light; a third light guiding part having a third light incident end on which the third light output from the third light source is incident and a third light exiting end via which the third light exits, the third light guiding part configured to homogenize in-plane illuminance of the third light; a first parallelizing part configured to parallelize the first light output from the first light guiding part; a second parallelizing part configured to parallelize the second light output from the second light guiding part; a third parallelizing part configured to parallelize the third light output from the third light guiding part; a first light modulator configured to modulate the first light output from the first parallelizing part based on image information; a second light modulator configured to modulate the second light output from the second parallelizing part based on image information; a third light modulator configured to modulate the third light output from the third parallelizing part based on image information; a light combiner configured to combine the first light output from the first light modulator, the second light output from the second light modulator, and the third light output from the third light modulator with one another and outputs the combined light; and a projection system configured to project the combined light output from the light combiner, wherein a first focal length of the first parallelizing part is longer than a first length from the first light incident end to the first light exiting end, a second focal length of the second parallelizing part is longer than a second length from the second light incident end to the second light exiting end, and a third focal length of the third parallelizing part is longer than a third length from the third light incident end to the third light exiting end.

The configuration described in Additional remark 1, which does not require an optical part used to generate white light or a light separating optical part provided on a color light basis, can reduce the number of parts, suppress an increase in size of a three-plate projector, and therefore realize a compact projector.

(Additional remark 2) The projector described in Additional remark 1, wherein the first light guiding part has a rectangular cross-sectional shape, the second light guiding part has a rectangular cross-sectional shape, and the third light guiding part has a rectangular cross-sectional shape.

The configuration described in Additional remark 2 can readily generate rectangular illumination light having a homogenized illuminance distribution.

(Additional remark 3) The projector described in Additional remark 1 or 2 further including: a first polarizer disposed between the first parallelizing part and the first light modulator and configured to transmit part of the first light that is the first light containing a first polarized component and reflect another part of the first light; a second polarizer disposed between the second parallelizing part and the second light modulator and configured to transmit part of the second light that is the second light containing a second polarized component and reflect another part of the second light; and a third polarizer disposed between the third parallelizing part and the third light modulator and configured to transmit part of the third light that is the third light containing a third polarized component and reflect another part of the third light, wherein the other part of the first light enters the first light guiding part, the other part of the second light enters the second light guiding part, and the other part of the third light enters the third light guiding part.

According to the configuration described in Additional remark 3, the first light, the second light, and the third light reflected off the first polarizer, the second polarizer, and the third polarizer are caused to enter the first light guiding part, the second light guiding part, and the third light guiding part again, so that the first light, the second light, and the third light can be used at increased efficiency.

(Additional remark 4) The projector described in any of Additional remarks 1 to 3, wherein a cross-sectional area of the first light exiting end is greater than a cross-sectional area of the first light incident end, a cross-sectional area of the second light exiting end is greater than a cross-sectional area of the second light incident end, and a cross-sectional area of the third light exiting end is greater than a cross-sectional area of the third light incident end.

According to the configuration described in Additional remark 4, the sizes of the regions irradiated with the first light, the second light, and the third light output from the first light source, the second light source, and the third light source are matched with the sizes of the light modulation surfaces of the first light modulator, the second light modulator, and the third light modulator, so that the illuminance distributions of the first light, the second light, and the third light can be homogenized and enlarged.

(Additional remark 5) The projector described in any of Additional remarks 1 to 4, wherein the first length from the first light incident end to the first light exiting end is longer than or equal to 8 mm but shorter than or equal to 25 mm, the second length from the second light incident end to the second light exiting end is longer than or equal to 8 mm but shorter than or equal to 25 mm, and the third length from the third light incident end to the third light exiting end is longer than or equal to 8 mm but shorter than or equal to 25 mm.

According to the configuration described in Additional remark 5, the first light, the second light, and the third light can be taken out at increased efficiency, and satisfactorily homogenized.

(Additional remark 6) The projector described in any of Additional remarks 1 to 5, wherein, 1.1 × g1 <_ f1 <_ 2.0 × g1 is satisfied, where g1 represents the first length, and f1 represents the first focal length, 1.1 × g2 <_ f2 <_ 2.0 × g2 is satisfied, where g2 represents the second length, and f2 represents the second focal length, and 1.1 × g3 ≤ f3 ≤ 2.0 × g3 is satisfied, where g3 represents the third length, and f3 represents the third focal length.

In the configuration described in Additional remark 6, the first light, the second light, and the third light output from the first light guiding part, the second light guiding part, and the third light guiding part are caused to efficiently enter the first parallelizing part, the second parallelizing part, and the third parallelizing part, so that the first light, the second light, and the third light can be used at increased efficiency, and the size of the projector can be reduced.

(Additional remark 7) The projector described in any of Additional remarks 1 to 6, wherein a focal point of the first parallelizing part is located at a side opposite from a light exiting side of the first light source via which the first light exits, a focal point of the second parallelizing part is located at a side opposite from a light exiting side of the second light source via which the second light exits, and a focal point of the third parallelizing part is located at a side opposite from a light exiting side of the third light source via which the third light exits.

In the configuration described in Additional remark 7, the focal lengths of the first parallelizing part, the second parallelizing part, and the third parallelizing part are appropriately disposed at the light incident side, so that the first light, the second light, and the third light can be used at increased efficiency, and the size of the projector can be reduced.

(Additional remark 8) The projector described in Additional remark 7, wherein when the first length is 1, a distance between a position of a focal point of the first parallelizing part and a light exiting surface of the first light source via which the first light exits is longer than or equal to 0.1 but shorter than or equal to 0.5.

In the configuration described in Additional remark 8, the first light, the second light, and the third light can be used at increased efficiency, and the size of the projector can be reduced.

(Additional remark 9) The projector described in any of Additional remarks 1 to 8, wherein the first light guiding part, the second light guiding part, and the third light guiding part are made of glass or metal.

In the configuration described in Additional remark 9, heat dissipation and heat resistance of the first light guiding part, the second light guiding part, and the third light guiding part can be enhanced.

(Additional remark 10) The projector described in any of Additional remarks 1 to 9, wherein the first light guiding part, the second light guiding part, and the third light guiding part are hollow, and a reflection film is provided at an inner surface of each of the first light guiding part, the second light guiding part, and the third light guiding part.

In the configuration described in Additional remark 10, loss of the first light, the second light, and the third light generated in the first light guiding part, the second light guiding part, and the third light guiding part can be suppressed, so that the first light, the second light, and the third light can be used at increased efficiency.

(Additional remark 11) The projector described in any of Additional remarks 1 to 10, wherein the first parallelizing part covers the first light exiting end when viewed along an optical axis of the first parallelizing part, the second parallelizing part covers the second light exiting end when viewed along an optical axis of the second parallelizing part, and the third parallelizing part covers the third light exiting end when viewed along an optical axis of the third parallelizing part.

The configuration described in Additional remark 11 suppresses the amounts of the first light, the second light, and the third light truncated by the first parallelizing part, the second parallelizing part, and the third parallelizing part, so that the first light, the second light, and the third light can be used at increased efficiency.

(Additional remark 12) The projector described in any of Additional remarks 1 to 11, wherein the first light guiding part, the second light guiding part, and the third light guiding part are hollow, at least a portion of the first parallelizing part is accommodated in the first light guiding part, at least a portion of the second parallelizing part is accommodated in the second light guiding part, and at least a portion of the third parallelizing part is accommodated in the third light guiding part.

The configuration described in Additional remark 12 can suppress the amounts of the first light, the second light, and the third light truncated by the first parallelizing part, the second parallelizing part, and the third parallelizing part, so that the first light, the second light, and the third light can be used at increased efficiency. In addition, the configuration described in Additional remark 12 can suppress the distances from the first light guiding part, the second light guiding part, and the third light guiding part to the first parallelizing part, the second parallelizing part, and the third parallelizing part in the direction along the optical axes of the first light, the second light, and the third light, so that an increase in the size of the projector can be suppressed.

(Additional remark 13) The projector described in Additional remark 3, wherein the first polarizer is fixed to the first parallelizing part, the second polarizer is fixed to the second parallelizing part, and the third polarizer is fixed to the third parallelizing part.

The configuration described in Additional remark 13 suppresses the distances from the first parallelizing part, the second parallelizing part, and the third parallelizing part to the first polarizer, the second polarizer, and the third polarizer to suppress loss of the first light, the second light, and the third light, so that the first light, the second light, and the third light can be used at increased efficiency, and an increase in the size of the projector can be suppressed.

(Additional remark 14) The projector described in Additional remark 5, wherein the first light guiding part has a rectangular cross-sectional shape, the second light guiding part has a rectangular cross-sectional shape, the third light guiding part has a rectangular cross-sectional shape, 7° ≤ α ≤ 22° is satisfied, where α represents an angle of a gradient of a side surface containing short sides of the first, second, and third light guiding parts, 14° ≤ β ≤ 36° is satisfied, where β represents an angle of a gradient of a side surface containing long sides of the first, second, and third light guiding parts, a reflection film is provided at an inner surface of each of the first, second, and third light guiding parts, and 60° ≤ θᵢₙ ≤ 90° is satisfied, where θᵢₙ represents angles of incidence of the first light, the second light, and the third light to be incident on the reflection films, the angles maximizing reflectance of the reflection films.

The configuration described in Additional remark 14 suppresses loss of the first light, the second light, and the third light reflected in the first light guiding part, the second light guiding part, and the third light guiding part and output via the first light exiting end, the second light exiting end, and the third light exiting end, so that the first light, the second light, and the third light can be used at increased efficiency.

(Additional remark 15) The projector described in Additional remark 3, further including: a fourth polarizer that is disposed between the first light modulator and the light combiner and configured to transmit part of the light output from the first light modulator that contains a fourth polarized component and absorb another part of the light; a fifth polarizer that is disposed between the second light modulator and the light combiner and configured to transmit part of the light output from the second light modulator that contains a fifth polarized component and absorb another part of the light; and a sixth polarizer disposed between the third light modulator and the light combiner and configured to transmit part of the light output from the third light modulator that contains a sixth polarized component and absorb another part of the light.

In the configuration described in the Additional remark 15, part of the light output from the first light modulator that contains the fourth polarized component, part of the light output from the second light modulator that contains the fifth polarized component, and part of the light output from the third light modulator that contains the sixth polarized component are caused to enter the light combiner, and the fourth polarizer, the fifth polarizer, and the sixth polarizer absorb the other part of the light output from the first light modulator, the second light modulator, and the third light modulator excluding the fourth polarized component, the fifth polarized component, and the sixth polarized component, preventing the other part of the light excluding the fourth polarized component, the fifth polarized component, and the sixth polarized component from forming return light and stray light directed back to the first light modulator, the second light modulator, and the third light modulator.

## Claims

1. A projector comprising:
a first light source configured to output first light in a first wavelength band;
a second light source configured to output second light in a second wavelength band different from the first wavelength band;
a third light source configured to output third light in a third wavelength band different from the first and second wavelength bands;
a first light guiding part having a first light incident end on which the first light output from the first light source is incident and a first light exiting end via which the first light exits, the first light guiding part configured to homogenize in-plane illuminance of the first light;
a second light guiding part having a second light incident end on which the second light output from the second light source is incident and a second light exiting end via which the second light exits, the second light guiding part configured to homogenize in-plane illuminance of the second light;
a third light guiding part having a third light incident end on which the third light output from the third light source is incident and a third light exiting end via which the third light exits, the third light guiding part configured to homogenize in-plane illuminance of the third light;
a first parallelizing part configured to parallelize the first light output from the first light guiding part;
a second parallelizing part configured to parallelize the second light output from the second light guiding part;
a third parallelizing part configured to parallelize the third light output from the third light guiding part;
a first light modulator configured to modulate the first light output from the first parallelizing part based on image information;
a second light modulator configured to modulate the second light output from the second parallelizing part based on image information;
a third light modulator configured to modulate the third light output from the third parallelizing part based on image information;
a light combiner configured to combine the first light output from the first light modulator, the second light output from the second light modulator, and the third light output from the third light modulator with one another and outputs the combined light; and
a projection system configured to project the combined light output from the light combiner,
wherein a first focal length of the first parallelizing part is longer than a first length from the first light incident end to the first light exiting end,
a second focal length of the second parallelizing part is longer than a second length from the second light incident end to the second light exiting end, and
a third focal length of the third parallelizing part is longer than a third length from the third light incident end to the third light exiting end.

2. The projector according to claim 1,
wherein the first light guiding part has a rectangular cross-sectional shape,
the second light guiding part has a rectangular cross-sectional shape, and
the third light guiding part has a rectangular cross-sectional shape.

3. The projector according to claim 1 or 2, further comprising:
a first polarizer disposed between the first parallelizing part and the first light modulator and configured to transmit part of the first light that is the first light containing a first polarized component and reflect another part of the first light;
a second polarizer disposed between the second parallelizing part and the second light modulator and configured to transmit part of the second light that is the second light containing a second polarized component and reflect another part of the second light; and
a third polarizer disposed between the third parallelizing part and the third light modulator and configured to transmit part of the third light that is the third light containing a third polarized component and reflect another part of the third light,
wherein the other part of the first light enters the first light guiding part,
the other part of the second light enters the second light guiding part, and
the other part of the third light enters the third light guiding part.

4. The projector according to any of claims 1 to 3,
wherein a cross-sectional area of the first light exiting end is greater than a cross-sectional area of the first light incident end,
a cross-sectional area of the second light exiting end is greater than a cross-sectional area of the second light incident end, and
a cross-sectional area of the third light exiting end is greater than a cross-sectional area of the third light incident end.

5. The projector according to any of claims 1 to 4,
wherein the first length from the first light incident end to the first light exiting end is longer than or equal to 8 mm but shorter than or equal to 25 mm,
the second length from the second light incident end to the second light exiting end is longer than or equal to 8 mm but shorter than or equal to 25 mm, and
the third length from the third light incident end to the third light exiting end is longer than or equal to 8 mm but shorter than or equal to 25 mm.

6. The projector according to any of claims 1 to 5,
wherein, 1.1 × g1 <_ f1 <_ 2.0 × g1 is satisfied, where g1 represents the first length, and f1 represents the first focal length,
1.1 × g2 <_ f2 <_ 2.0 × g2 is satisfied, where g2 represents the second length, and f2 represents the second focal length, and
1.1 × g3 <_ f3 <_ 2.0 × g3 is satisfied, where g3 represents the third length, and f3 represents the third focal length.

7. The projector according to any of claims 1 to 6,
wherein a focal point of the first parallelizing part is located at a side opposite from a light exiting side of the first light source via which the first light exits,
a focal point of the second parallelizing part is located at a side opposite from a light exiting side of the second light source via which the second light exits, and
a focal point of the third parallelizing part is located at a side opposite from a light exiting side of the third light source via which the third light exits.

8. The projector according to claim 7,
wherein when the first length is 1, a distance between a position of the focal point of the first parallelizing part and a light exiting surface of the first light source via which the first light exits is longer than or equal to 0.1 but shorter than or equal to 0.5.

9. The projector according to any of claims 1 to 8,
wherein the first light guiding part, the second light guiding part, and the third light guiding part are made of glass or metal.

10. The projector according to any of claims 1 to 9,
wherein the first light guiding part, the second light guiding part, and the third light guiding part are hollow, and
a reflection film is provided at an inner surface of each of the first light guiding part, the second light guiding part, and the third light guiding part.

11. The projector according to any of claims 1 to 10,
wherein the first parallelizing part covers the first light exiting end when viewed along an optical axis of the first parallelizing part,
the second parallelizing part covers the second light exiting end when viewed along an optical axis of the second parallelizing part, and
the third parallelizing part covers the third light exiting end when viewed along an optical axis of the third parallelizing part.

12. The projector according to any of claims 1 to 11,
wherein the first light guiding part, the second light guiding part, and the third light guiding part are hollow,
at least a portion of the first parallelizing part is accommodated in the first light guiding part,
at least a portion of the second parallelizing part is accommodated in the second light guiding part, and
at least a portion of the third parallelizing part is accommodated in the third light guiding part.

13. The projector according to claim 3,
wherein the first polarizer is fixed to the first parallelizing part,
the second polarizer is fixed to the second parallelizing part, and
the third polarizer is fixed to the third parallelizing part.

14. The projector according to claim 5,
wherein the first light guiding part has a rectangular cross-sectional shape,
the second light guiding part has a rectangular cross-sectional shape,
the third light guiding part has a rectangular cross-sectional shape,
7° ≤ α ≤ 22° is satisfied, where α represents an angle of a gradient of a side surface containing short sides of the first, second, and third light guiding parts,
14° ≤ β ≤ 36° is satisfied, where β represents an angle of a gradient of a side surface containing long sides of the first, second, and third light guiding parts,
a reflection film is provided at an inner surface of each of the first, second, and third light guiding parts, and
60° ≤ θᵢₙ ≤ 90° is satisfied, where θᵢₙ represents angles of incidence of the first light, the second light, and the third light to be incident on the reflection films, the angles maximizing reflectance of the reflection films.

15. The projector according to claim 3, further comprising:
a fourth polarizer that is disposed between the first light modulator and the light combiner and configured to transmit part of the light output from the first light modulator that contains a fourth polarized component and absorb another part of the light;
a fifth polarizer that is disposed between the second light modulator and the light combiner and configured to transmit part of the light output from the second light modulator that contains a fifth polarized component and absorb another part of the light; and
a sixth polarizer disposed between the third light modulator and the light combiner and configured to transmit part of the light output from the third light modulator that contains a sixth polarized component and absorb another part of the light.
